# EUROPEAN PATENT SPECIFICATION

(11) **EP 3 992 055 B1**
(45) Date of publication and mention of the grant of the patent: **22.11.2023**
(21) Application number: 21199522.0
(22) Date of filing: 28.09.2021
(51) Int. Cl.: B61H 5/00, B61H 15/00, F16D 55/224

(54) **BRAKE CALIPER**
BREMSSATTEL
ÉTRIER DE FREIN

(30) Priority: 28.10.2020 JP 2020180843
(43) Date of publication of application: 04.05.2022
(73) Proprietor: Nabtesco Corporation, Tokyo 102-0093 (JP)
(72) Inventor: Ohno, Tomoya, Tokyo (JP)
(74) Representative: Grünecker Patent- und Rechtsanwälte PartG mbB

(56) References cited:
- EP-A1- 0 121 815
- WO-A1-2013/089018
- WO-A1-2015/182400
- WO-A1-2016/009905
- DE-A1-102011 009 540
- GB-A- 1 261 547
- GB-A- 2 153 461
- US-A- 5 813 499

## Description

### TECHNICAL FIELD

The present invention relates to a brake caliper.

### BACKGROUND

DE 10 2011 009 540 A1 discloses a brake caliper having the features of the preamble of claim 1. GB 2 153 461 A discloses a brake caliper having two levers sandwiching a disc and being actuated by an output rod and a gap adjuster. Furthermore, Patent Literature 1 discloses a brake caliper for applying a braking force to a wheel of a railway vehicle by forcing a brake pad against a disc that rotates integrally with the wheel. The brake caliper includes a pair of caliper levers. At the tip end portion of the caliper levers, a brake pad is attached. Between the base end portions of the caliper levers, a gap adjuster for adjusting the gap between the disc and the brake pads is provided. The gap adjuster is coupled to the base end portion of each caliper lever.
One of the caliper levers is coupled to an output shaft fixedly attached to a piston provided within a cylinder so that the caliper lever is rotatable when acted upon by a force provided from the output shaft. In the brake device disclosed in the Patent Literature 1, as the output shaft protrudes, the brake pads supported on the tip end portions of the caliper levers touch the disc.

The brake caliper disclosed in Patent Literature 1 includes a transmission rod for transmitting a force from the output shaft to the gap adjuster. The transmission rod extends in the direction from around the tip end portions of the caliper levers toward their base end portions. In the brake caliper disclosed in Patent Literature 1, as the output shaft protrudes, the transmission rod moves in the axial direction of the transmission rod to approach the gap adjuster. Once the force from the transmission rod is transmitted to the gap adjuster, an internally threaded female screw portion of the gap adjuster rotates relative to an externally threaded male screw portion of the gap adjuster. This rotation of the female screw portion increases the distance between the base end portions of the caliper levers. The caliper levers then rotate such that the distance between the tip end portions of the caliper levers decreases. In this manner, the gap between the disc and the brake pads is adjusted.

### RELEVANT REFERENCES

### LIST OF RELEVANT PATENT LITERATURE

Patent Literature 1: European Patent Application Publication No. 0732247

### SUMMARY

In the brake caliper described in Patent Literature 1, as the caliper levers rotate, the distance between the transmission rod and the gap adjuster changes. If the distance between the gap adjuster and the transmission rod increases, this means that the amount of the adjustment made by the gap adjuster for the gap between the disk and the brake pads is reduced. Stated differently, the amount of the gap adjustment transmitted may be different from the intended amount. The same problem may arise not only in brake calipers including the gap adjuster including the male and female screw portions but also in brake calipers including a gap adjuster configured to receive a displacement of the output shaft transmitted thereto.

To solve the above problems, a brake caliper includes two caliper levers each retaining a brake pad, an output rod for outputting a force to move the caliper levers such that a single disc is sandwiched between the two brake pads, a gap adjuster fixedly attached between the two caliper levers, where the gap adjuster is configured to adjust gaps between the brake pads and the disc, a body retaining the two caliper levers in a movable manner and retaining the output rod, a displaceable portion fixedly attached to the body, where the displaceable portion is displaceable when acted upon by the output from the output rod if the output rod moves a predetermined distance or more, a guide member having ends fixedly attached to the body and the gap adjuster, where the guide member is formed of a tubular flexible member longer than a distance between the body and the gap adjuster observed when relative displacement between the body and the gap adjuster exhibits a largest value, and a transmission member extending through the guide member to connect together the displaceable portion and an input unit of the gap adjuster, where the transmission member is configured to transmit a displacement of the displaceable portion to the input unit in order to actuate the gap adjuster.

Since the two caliper levers move relative to the body, the displaceable portion and the gap adjuster are displaced relative to each other. This also changes the distance between the gap adjuster and the body. With the above-described arrangement, the length of the guide member is greater than the largest distance between the body and the gap adjuster. Accordingly, the body and the gap adjuster may be displaced relative to each other, but the guide member and the transmission member bend while moving and are not pulled. This prevents the relative displacement between the body and the gap adjuster from affecting the amount of the gap adjustment transmitted to the gap adjuster.

The brake caliper preferably includes a casing fixedly attached to the body and covering the displaceable portion, and one of the ends of the guide member that is fixedly attached to the body is fixedly attached to the casing.

The brake caliper preferably includes a contact portion movable together with the output rod, where the contact portion is configured to touch the displaceable portion when the output rod moves the predetermined distance or more and then returns to an original position, thereby returning the displaceable portion to an original position.

In the brake caliper, the displaceable portion preferably includes a rotatable arm, and the arm preferably does not touch the contact portion until the output rod moves the predetermined distance and is positioned on a path to be followed by the contact portion once the output rod has moved the predetermined distance or more.

In the brake caliper, the input unit of the gap adjuster preferably has an arc-shaped surface, an end of the transmission member is preferably fixedly attached to the arc-shaped surface of the input unit of the gap adjuster, and the transmission member preferably extends in a direction tangent to the arc-shaped surface.

In the brake caliper, the displaceable portion preferably has an arc-shaped surface, an end of the transmission member is preferably fixedly attached to the arc-shaped surface of the displaceable portion, and the transmission member preferably extends in a direction tangent to the arc-shaped surface.

In the brake caliper, the displaceable portion preferably includes an amplifying mechanism for amplifying the output from the output rod and using the amplified output to pull the transmission member. In the brake caliper, the amplifying mechanism preferably includes an effort arm rotatable around a fulcrum when acted upon by the output from the output rod and a load arm rotatable around the fulcrum when acted upon by the output from the output rod to pull the transmission member, and the effort arm preferably has a shorter length than the load arm.

In the brake caliper, the output rod preferably includes a contact portion configured to touch the effort arm when the output rod moves in an output direction in which the output is made and to touch the load arm to return the displaceable portion to an original position when the output rod moves in a non-output direction in which no output is made.

In the brake caliper, the displaceable portion preferably includes a converting unit for converting movement of the output rod into movement of the transmission member in a direction intersecting a direction in which the output rod is movable. In the brake caliper, the converting unit preferably also serves as an amplifying mechanism for amplifying the output from the output rod and transmitting the amplified output to the transmission member.

The brake caliper preferably includes an energizing member provided in an input unit of the gap adjuster, where the energizing member is configured to pull the transmission member. In the brake caliper, the input unit of the gap adjuster preferably includes a one-way clutch connected to the transmission member, and, when the transmission member is pulled by the displaceable portion, the one-way clutch preferably rotates, and when the displaceable portion returns to an original position, an energizing force from the energizing member preferably rotates the input unit in an opposite direction, thereby elongating the gap adjuster and accordingly reducing the gaps between the brake pads and the disc.

In the brake caliper, the transmission member is preferably a wire, and the guide member is preferably shaped like a tube and the wire is preferably displaceable within the guide member. In the brake caliper, an actuator preferably includes the output rod for outputting a force to rotate the caliper levers and the displaceable portion includes an effort arm rotatable around a fulcrum when acted upon by the output from the output rod, a load arm rotatable around the fulcrum when acted upon by the output to displace the transmission member, and a converting unit for converting movement of the output rod into movement of the transmission member in a direction intersecting a direction in which the output rod is movable, and the effort arm has a shorter length than the load arm, so that the displaceable portion amplifies the output from the output rod and uses the amplified output to displace the transmission member.

Since the two caliper levers move relative to the body, the displaceable portion and the gap adjuster are displaced relative to each other. This also changes the distance between the gap adjuster and the body. With the above-described arrangement, the length of the guide member is greater than the largest distance between the body and the gap adjuster. Accordingly, the body and the gap adjuster may be displaced relative to each other, but the guide member and the transmission member bend while moving and are not pulled. This prevents the relative displacement between the body and the gap adjuster from affecting the amount of the gap adjustment transmitted to the gap adjuster.

### ADVANTAGEOUS EFFECTS

The present invention can keep the amount of the gap adjustment transmitted to the gap adjuster from affected.

### BRIEF DESCRIPTION OF THE DRAWINGS

Fig. 1 is a perspective view showing a first embodiment of a brake caliper.
Fig. 2 is across sectional view showing the first embodiment of the brake caliper.
Fig. 3 is an exploded perspective view showing the first embodiment of the brake caliper.
Fig. 4 is a back view showing the first embodiment of the brake caliper.
Fig. 5 is a left side view showing the brake caliper of the first embodiment.
Fig. 6 is an enlarged back view showing a gap output unit of the brake caliper of the first embodiment.
Fig. 7 is an enlarged back view showing the gap output unit of the first embodiment of the brake caliper.
Fig. 8 is an enlarged perspective view showing the gap output unit of the first embodiment of the brake caliper.
Fig. 9 is an enlarged plan view showing how a displacement occurs in the first embodiment of the brake caliper.
Fig. 10 is an enlarged plan view showing how a displacement occurs in the first embodiment of the brake caliper.
Fig. 11 is an enlarged perspective view showing a gap adjustment device of a second embodiment of the brake caliper.
Fig. 12 is an enlarged plan view showing the gap adjustment device of the second embodiment of the brake caliper.
Fig. 13 is an enlarged plan view showing the gap adjustment device of the second embodiment of the brake caliper.
Fig. 14 is an enlarged left side view showing the gap adjustment device of the second embodiment of the brake caliper.
Fig. 15 is an enlarged perspective view showing a gap adjustment device of a third embodiment of the brake caliper.
Fig. 16 is an enlarged bottom view showing the gap adjustment device of the third embodiment of the brake caliper.
Fig. 17 is an enlarged perspective view showing a gap adjustment device of a fourth embodiment of the brake caliper.
Fig. 18 is an enlarged bottom view showing the gap adjustment device of the fourth embodiment of the brake caliper.
Fig. 19 is an enlarged plan view showing the gap adjustment device of the fourth embodiment of the brake caliper.
Fig. 20 is an enlarged plan view showing the gap adjustment device of the fourth embodiment of the brake caliper.

### DESCRIPTION OF THE PREFERRED EMBODIMENTS

### <First Embodiment>

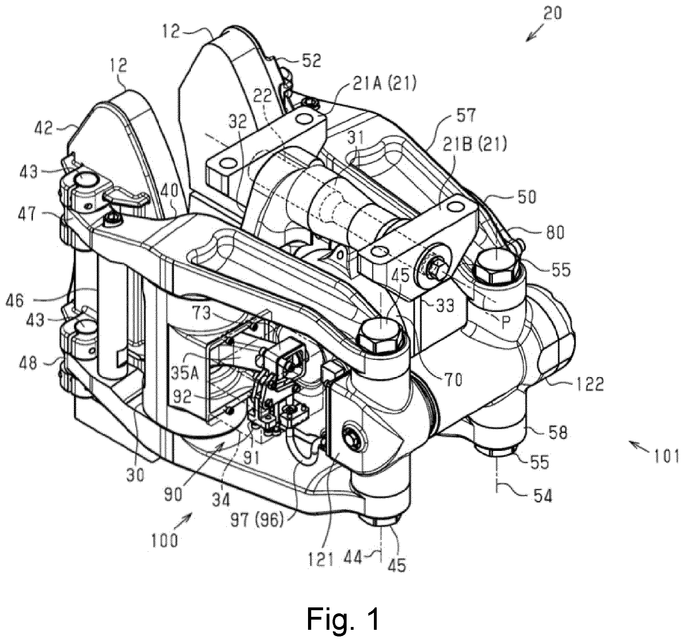

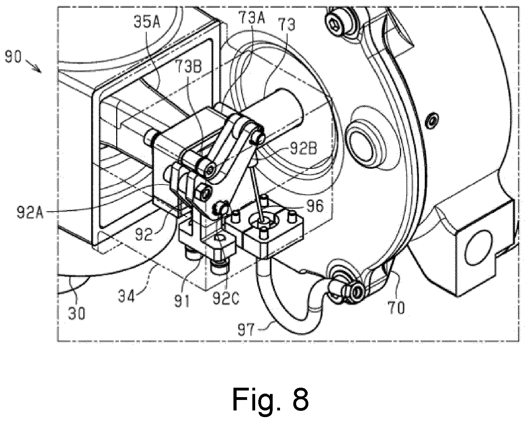

With reference to Figs. 1 to 10, a first embodiment of the brake caliper will now be described.

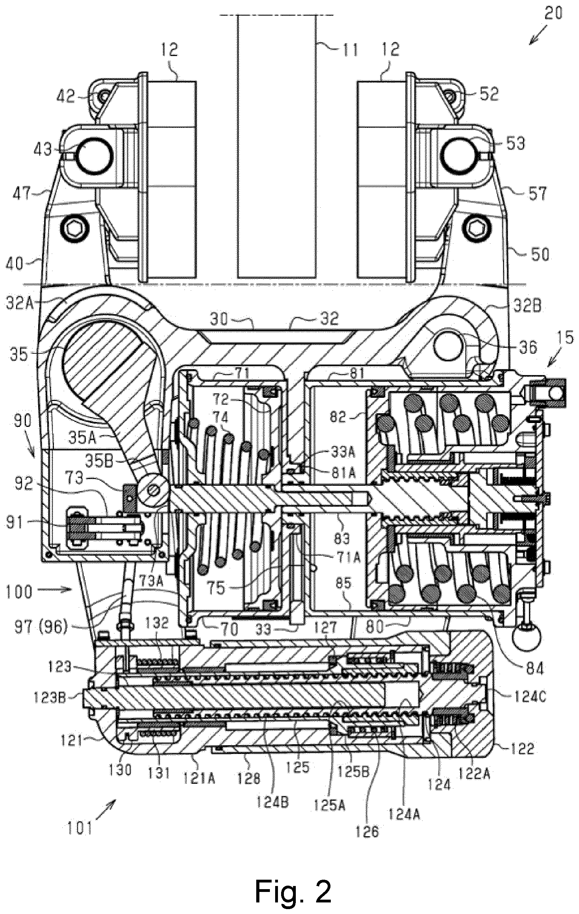

As shown in Figs. 1 and 2, a brake caliper 20 is mounted to a bogie (not shown) of a railway vehicle and configured to apply a braking force to a wheel of the bogie by pressing brake pads 12 against a disc 11 (see Fig. 2) that rotates integrally with an axle for rotating the wheel. The brake caliper 20 forms a disc brake device together with the disc 11.

The brake caliper 20 includes a bracket 21 (see Fig. 1) mounted to the bogie, a body 30 rotatably hung on the bracket 21, and a pair of left and right caliper levers 40 and 50 held by the body 30. The body 30 retains the pair of left and right caliper levers 40 and 50 rotatably, so that the two brake pads 12 are movable to a position where they sandwich the single disc 11 and a position where they do not sandwich the single disc 11.

The brake caliper 20 further includes a cylinder device 15 for outputting a force to turn the left caliper lever 40 and the right caliper lever 50 relative to the disc 11 so that the brake pads 12 are pressed against the disc 11. The cylinder device 15 is driven by compressed air fed thereto and discharged therefrom. The compressed air fed to the cylinder device 15 is taken from a tank installed on the railway vehicle. The cylinder device 15 is removably mounted to the body 30. Here, the cylinder device 15 corresponds to an actuator.

The bracket 21 includes a first bracket 21A and a second bracket 21B. The body 30 is disposed between the first bracket 21A and the second bracket 21B. A coupling pin 22 penetrates through the first bracket 21A, the body 30, and the second bracket 21B to couple together the first bracket 21A, the body 30, and the second bracket 21B. The body 30 has a base portion 31 through which the coupling pin 22 penetrates. The base portion 31 rotates about a rotational axis P that extends orthogonal to the axial direction of the axle of the bogie and extends along a direction in which the left and right caliper levers 40 and 50 extend.

The body 30 includes a first support portion 32 that extends from below the base portion 31 toward the left and right caliper levers 40 and 50 to support the left and right caliper levers 40 and 50. The body 30 also includes a second support portion 33 that extends from the center of the first support portion 32 toward the rear side in the longitudinal direction of the left and right caliper levers 40 and 50 to support the cylinder device 15. The second support portion 33 is a plate-shaped member. The base portion 31, the first support portion 32, and the second support portion 33 of the body 30 are formed as a single unit body. When the bogie is tilted in the axial direction of the axle, the body 30 turns about the rotational axis P. This enables the brake pads 12 to always remain parallel to the disc 11.

A left support portion 32A supporting the left caliper lever 40 is provided on the left portion of the first support portion 32. A left rotation pin 35 penetrates through the left support portion 32A to support the left caliper lever 40 rotatably relative to the body 30. The left rotation pin 35 is rotatable relative to the left support portion 32A. An operation lever 35A is fixedly attached to the left rotation pin 35 and is operated by a driving force from the cylinder device 15. A right support portion 32B supporting the right caliper lever 50 is provided on the right portion of the first support portion 32. Right rotation pins 36 penetrate through the upper and lower portions of the right support portion 32B respectively to support the right caliper lever 50 rotatably relative to the body 30. The right rotation pins 36 are fixed to the right support portion 32B.

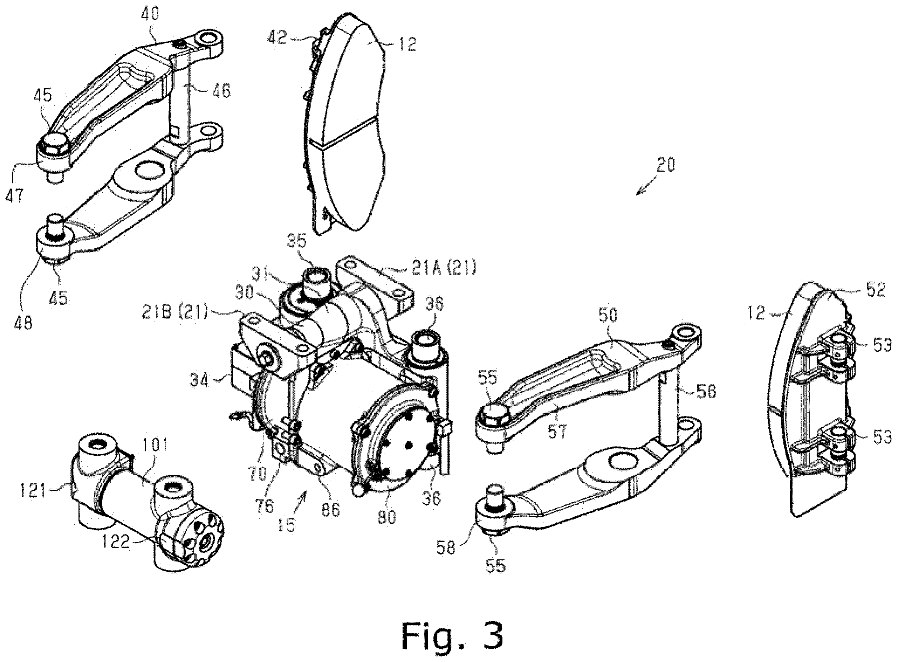

As shown in Fig. 3, the left caliper lever 40 includes a pair of left upper lever 47 and a left lower lever 48. The left upper and lower levers 47 and 48 are spaced away from each other and face each other in the axial direction of the left rotation pin 35. At the tip end portion of the left caliper lever 40, a pad attachment member 42 is connected via two pad rotation pins 43. To the pad attachment member 42, the brake pad 12 is attached (see Fig. 1). The pad rotation pins 43 are rotatable relative to the left upper and lower levers 47 and 48. The pad rotation pins 43 are fixedly attached to the pad attachment member 42. The left upper and lower levers 47 and 48 are coupled together via a left lever coupling pin 46.

The right caliper lever 50 includes a pair of a right upper lever 57 and a right lower lever 58. The right upper and lower levers 57 and 58 are spaced away from each other and face each other in the axial direction of the right rotation pin 36. At the tip end portion of the right caliper lever 50, a pad attachment member 52 is connected via two pad rotation pins 53. To the pad attachment member 52, the brake pad 12 is attached. The pad rotation pins 53 are rotatable relative to the right upper and lower levers 57 and 58. The pad rotation pins 53 are fixedly attached to the pad attachment member 52. The right upper and lower levers 57 and 58 are coupled together via a right lever coupling pin 56.

As shown in Fig. 2, the cylinder device 15 is mounted to the second support portion 33 of the body 30. The cylinder device 15 includes a service brake cylinder 70 and a parking brake cylinder 80. The service brake cylinder 70 and the parking brake cylinder 80 are mounted to surfaces of the second support portion 33 that are perpendicular to the axle. The service brake cylinder 70 is mounted to the left-side surface of the second support portion 33 of the body 30. The parking brake cylinder 80 is mounted to the right-side surface of the second support portion 33 of the body 30. This means that the service and parking brake cylinders 70 and 80 sandwich the second support portion 33 of the body 30. The surfaces of the second support portion 33 to which the service brake cylinder 70 and the parking brake cylinder 80 are mounted are parallel to the direction in which the left and right caliper levers 40 and 50 extend and are parallel to the surface of the brake pads 12.

As shown in Fig. 3, the service and parking brake cylinders 70 and 80 are each fixed to the second support portion 33 with four bolts. The service brake cylinder 70 and the parking brake cylinder 80 are bolted to the second support portion 33 at different positions. Therefore, the service and parking brake cylinders 70 and 80 can be mounted to and removed from the second support portion 33 independently from each other.

As shown in Fig. 2, the second support portion 33 of the body 30 has an opening 33A formed at the center thereof. The opening 33A is elongated in the longitudinal direction of the left and right caliper levers 40 and 50. With such a design, in mounting and removing the service and parking brake cylinders 70 and 80, they can be moved in the opening 33A in the longitudinal direction of the left and right caliper levers 40 and 50.

The service brake cylinder 70 can be removed from the left-side surface of the second support portion 33 of the body 30 by taking off the bolts. The parking brake cylinder 80 can be removed from the right-side surface of the second support portion 33 of the body 30 by taking off the bolts. The gap adjustment device 100 can be removed from the left and right caliper levers 40 and 50 by taking off bolts 45 and 55. With such a design, the cylinder device 15 and the gap adjustment device 100 can be readily removed and mounted for inspection and replacement. Any number of bolts may be used to fix the cylinder device 15.

The service brake cylinder 70 includes a first cylinder chamber 71, a first piston 72, a first rod 73, and a first spring 74. The first piston 72 moves within the first cylinder chamber 71. The first rod 73 is fixed to the first piston 72 and projects from the first cylinder chamber 71. The first spring 74 energizes the first piston 72 in such a direction that the first rod 73 is housed in the first cylinder chamber 71. A first space 75 is defined in the first cylinder chamber 71 as the space not including the first spring 74. The service brake cylinder 70 includes a first feeding port 76 for feeding compressed air into the first space 75 within the first cylinder chamber 71 (see Fig. 3). The first feeding port 76 is provided outside the first cylinder chamber 71. When the compressed air is fed into the first space 75 within the first cylinder chamber 71 of the service brake cylinder 70, the first piston 72 is pushed such that the first rod 73 projects. When the compressed air is discharged from the first space 75 within the first cylinder chamber 71 of the service brake cylinder 70, the first spring 74 pushes the first piston 72 so that the first rod 73 is accommodated in the first cylinder chamber 71. The first rod 73 corresponds to an output rod of the service brake cylinder 70. The first cylinder chamber 71 corresponds to a casing of the service brake cylinder 70.

The parking brake cylinder 80 includes a second cylinder chamber 81, a second piston 82, a second rod 83, and a second spring 84. The second piston 82 moves within the second cylinder chamber 81. The second rod 83 is fixed to the second piston 82 and projects from the second cylinder chamber 81 and extends into the first cylinder chamber 71. The second spring 84 energizes the second piston 82 in such a direction that the second rod 83 projects from the second cylinder chamber 81. A second space 85 is defined in the second cylinder chamber 81 as the space not including the second spring 84. The parking brake cylinder 80 includes a second feeding port 86 (see Fig. 3) for feeding compressed air into the second space 85 within the second cylinder chamber 81. The second feeding port 86 is provided outside the second cylinder chamber 81. When the compressed air is fed into the second space 85 within the second cylinder chamber 81 of the parking brake cylinder 80, the second piston 82 is pushed such that the second rod 83 is accommodated into the second cylinder chamber 81. When the compressed air is discharged from the second space 85 in the second cylinder chamber 81 of the parking brake cylinder 80, the second spring 84 pushes the second piston 82, so that the second rod 83 projects from the second cylinder chamber 81 and enters the first cylinder chamber 71. As a result, the second rod 83 pushes the first piston 72, so that the first rod 73 projects outside. The second rod 83 corresponds to an output rod of the parking brake cylinder 80. The second cylinder chamber 81 corresponds to a casing of the parking brake cylinder 80.

The first cylinder chamber 71 includes a first projecting portion 71A that projects into the opening 33A. The second cylinder chamber 81 includes a second projecting portion 81A that projects into the opening 33A. The second projecting portion 81A is penetrated by the second rod 83. The first projecting portion 71A is fitted around the second projecting portion 81A. With such arrangement, the first rod 73 of the service brake cylinder 70 and the second rod 83 of the parking brake cylinder 80 are positioned coaxially, and the output of the parking brake cylinder 80 is transmitted to the service brake cylinder 70.

A rotatable roller 35B is attached to the tip end of the operation lever 35A. The first rod 73 of the cylinder device 15 has a receiving portion 73A provided in the tip end thereof. The receiving portion 73A is a through-hole for receiving therein the roller 35B while touching the roller 35B. The receiving portion 73A is configured to transmit the driving force from the first rod 73 to the operation lever 35A, while absorbing the lag between the linear movement of the first rod 73 and the rotational movement of the operation lever 35A.

As shown in Figs. 1, 2, 4 and 5, the brake caliper 20 includes the gap adjustment device 100 for adjusting the gaps between the brake pads 12 and the disc 11. The gap adjustment device 100 includes a gap adjuster 101 for adjusting the gaps and a gap output unit 90 for outputting a gap to the gap adjuster 101. The gap output unit 90 includes a displaceable portion 91 and a wire 96, The displaceable portion 91 pulls the wire 96 to an extent determined by the amount of the movement of the first rod 73 of the cylinder device 15. The wire 96 corresponds to a transmission member.

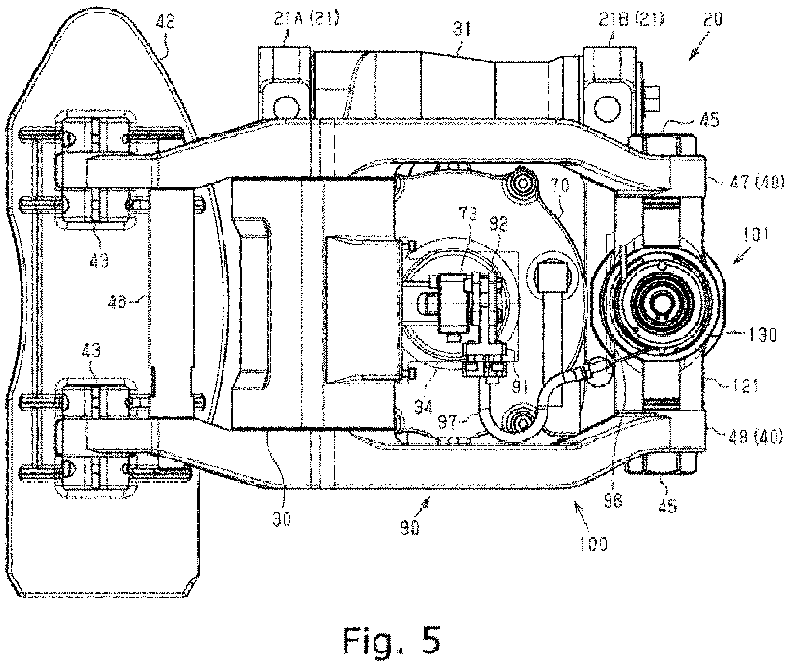

As shown in Fig. 5, the body 30 has a casing 34 attached thereto, where the displaceable portion 91 is housed. The displaceable portion 91 is rotatably secured in the casing 34. When the first rod 73 moves a predetermined distance or more in a projecting direction in which the first rod 73 may project, the displaceable portion 91 is acted upon by the output from the first rod 73 and thus is displaced. The gap output unit 90 includes an outer tube 97 made of a flexible material. The ends of the outer tube 97 are fixedly attached to the body 30 and the gap adjuster 101. The outer tube 97 corresponds to a guide member. A first one of the ends of the outer tube 97 is fixedly attached to the casing 34. A second one of the ends of the outer tube 97 is fixedly attached to the casing of the gap adjuster 101. The outer tube 97 is not displaced when the displaceable portion 91 pulls the wire 96. On the other hand, the outer tube 97 is displaced when the body 30 and the gap adjuster 101 are displaced relative to each other. The wire 96 penetrates the outer tube 97, has a length greater than the outer tube 97 and has ends connected to the displaceable portion 91 and the input unit of the gap adjuster 101. The wire 96 is pulled or pushed depending on the amount of the displacement of the displaceable portion 91 to transmit the amount of the gap adjustment to the input unit of the gap adjuster 101.

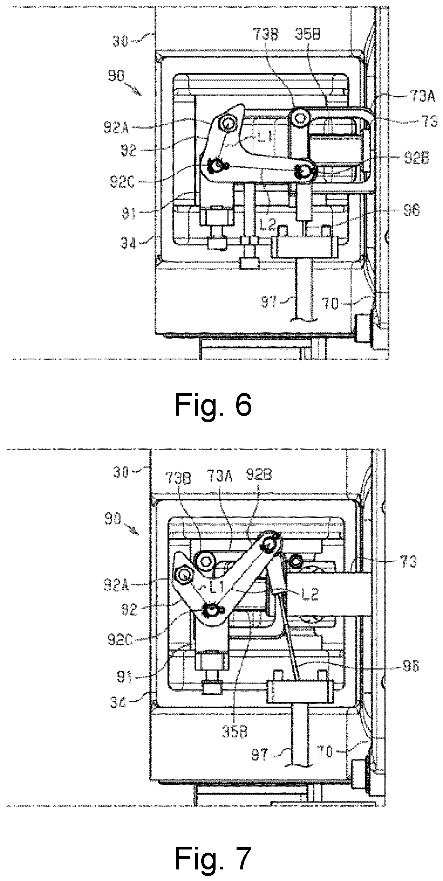

As shown in Figs. 6 to 8, the displaceable portion 91 includes an amplifying mechanism 92 for amplifying the output from the first rod 73 and using the amplified output to pull the wire 96. The amplifying mechanism 92 includes an effort arm 92A and a load arm 92B. The effort and load arms 92A and 92B are integrally rotatable around a fulcrum or a support shaft 92C. The axis of the support shaft 92C extends orthogonally to the direction in which the first rod 73 moves and parallel to the direction in which the left caliper lever 40 extends. The effort arm 92A is rotatable around the fulcrum when acted upon by the output from the first rod 73. The load arm 92B is rotatable around the fulcrum when acted upon by the rotation of the effort arm 92A. To the tip end of the load arm 92B, the wire 96 is rotatably connected. The load arm 92B pulls the wire 96. The length L1 of the effort arm 92A is less than the length L2 of the load arm 92B (L1 < L2). With such a design, the displacement input from the first rod 73 to the effort arm 92A is amplified and the amplified displacement is output from the load arm 92B. The degree of the amplification can be adjusted by changing the ratio of the length L1 of the effort arm 92A to the length L2 of the load arm 92B.

As shown in Fig. 7, the first rod 73 includes a contact portion 73B configured to contact the displaceable portion 91. The contact portion 73B is a rotatable roller and attached to a housing portion 73A of the first rod 73. The displaceable range of the first rod 73 is different from the displaceable range of the amplifying mechanism 92, and the ranges are next to each other in the axial direction of the support shaft 92C. The contact portion 73B projects into the displaceable range of the amplifying mechanism 92. When the first rod 73 moves a predetermined distance or more in a braking direction, the contact portion 73B touches the effort arm 92A of the displaceable portion 91, thereby rotating the amplifying mechanism 92 anti-clockwise as seen from back. The load arm 92B does not touch the contact portion 73B until the first rod 73 moves the predetermined distance, and is positioned on the path to be followed by the contact portion 73B once the first rod 73 has moved the predetermined distance or more. As shown in Fig. 6, when the first rod 73 has moved the predetermined distance or more and then returns to the original position, in other words, moves in a non-braking direction opposite to the braking direction, the contact portion 73B touches the load arm 92B of the displaceable portion 91, thereby rotating the amplifying mechanism 92 clockwise as seen from back. As a result, the amplifying mechanism 92 of the displaceable portion 91 returns to the original position. The wire 96 moves in the top-bottom direction in Figs. 6 and 7. The first rod 73 moves in the left-right direction in Figs. 6 and 7. This means that the amplifying mechanism 92 also serves as a converting unit rotatable around the support shaft 92C to convert the movement of the first rod 73 into the movement of the wire 96 in the direction intersecting the direction of the movement of the first rod 73.

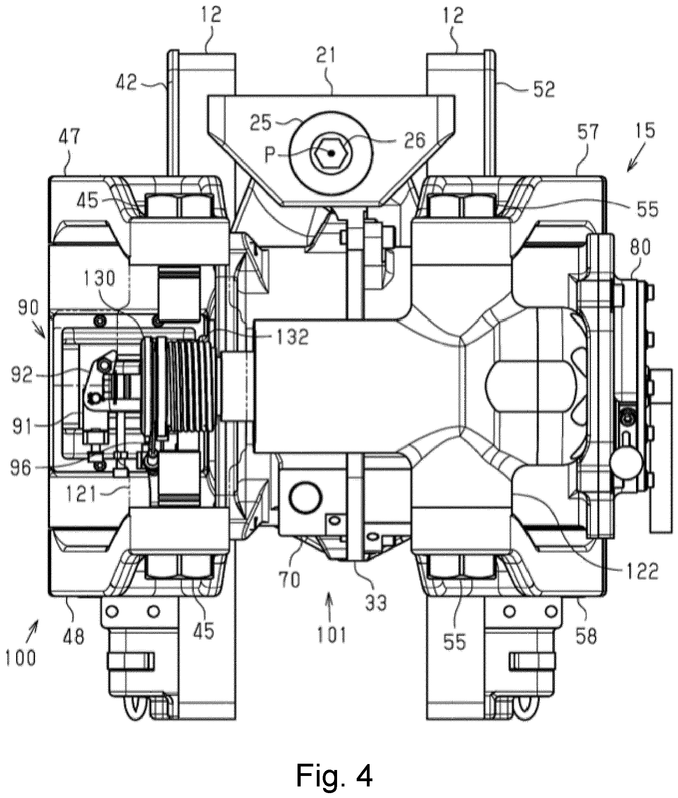

As shown in Figs. 1 and 4, the gap adjuster 101 connects between the base end portion of the left caliper lever 40 and the base end portion of the right caliper lever 50. The left caliper lever 40 and the gap adjuster 101 are turnably coupled with each other with a pair of upper and lower bolts 45. The right caliper lever 50 and the gap adjuster 101 are turnably coupled with each other with a pair of upper and lower bolts 55. The left caliper lever 40 and the gap adjuster 101 rotate about a rotational axis 44, and the right caliper lever 50 and the gap adjuster 101 rotate about a rotational axis 54.

As shown in Fig. 2, the gap adjustment device 100 adjusts the distance between the base end portion of the left caliper lever 40 and the base end portion of the right caliper lever 50 to adjust the gaps between the brake pads 12 and the disc 11. As the brake pads 12 wear off, the gap grows between the brake pads 12 and the disc 11. To deal with this issue, the gap adjustment device 100 increases the distance between the base end portion of the left caliper lever 40 and the base end portion of the right caliper lever 50, thereby reducing the distance between the brake pads 12 and the disc 11.

The displaceable portion 91 pulls the wire 96 if the first rod 73 moves a predetermined amount or more. In other words, if the first rod 73 protrudes and the amount of the protrusion reaches a predetermined value, the contact portion 73B of the first rod 73 touches the effort arm 92A of the amplifying mechanism 92, as a result of which the displaceable portion 91 rotates and the load arm 92B of the amplifying mechanism 92 accordingly pulls the wire 96.

As shown in Figs. 1 and 4, the gap adjuster 101 includes a first casing 121 and a second casing 122. The first casing 121 connects between the respective base end portions of the left upper and lower levers 47 and 48. The first casing 121 is turnably coupled with the left upper and lower levers 47 and 48 via the bolts 45. The second casing 122 connects between the respective base end portions of the right upper and lower levers 57 and 58. The second casing 122 is turnably coupled with the right upper and lower levers 57 and 58 via the bolts 55.

As shown in Fig. 2, the first casing 121 includes an extension portion 121A having a cylindrical shape and extending toward the second casing 122. A polygonal rod 123 shaped like a polygonal column is fixed to the first casing 121. The polygonal rod 123 extends in the extension direction of the extension portion 121A of the first casing 121.

The base end portion of the polygonal rod 123 protrudes out of the first casing 121. The base end portion of the polygonal rod 123 includes a hexagonal portion 123B shaped like a hexagonal column. The hexagonal portion 123B of the polygonal rod 123 can be manually rotated to adjust the gaps between the brake pads 12 and the disc 11.

A cylindrical screw shaft 124 is fixed to the second casing 122 and extends toward the first casing 121. The screw shaft 124 has a cylindrical space 124A formed therein. The space 124A is open at the first casing 121 side only. The space 124A in the screw shaft 124 receives the polygonal rod 123 inserted therein. The screw shaft 124 has external threads 124B on the outer surface thereof excluding the portion fixed to the second casing 122. The screw shaft 124 is supported by a support spring 122A. The base end portion of the screw shaft 124 has a hexagonal portion 124C shaped like a hexagonal column. The hexagonal portion 124C of the screw shaft 124 can be manually rotated to adjust the gaps between the brake pads 12 and the disc 11. With the above arrangement, the gap adjustment is accessible from both sides of the gap adjuster 101. The gaps thus can be adjusted by a large amount at one time, resulting in increased efficiency and ease of the adjustment during maintenance work.

An adjustment nut 125 shaped like a cylinder is provided on the outer periphery of the screw shaft 124. The inner wall of the adjustment nut 125 partially has internal threads 125A that are configured to engage with the external threads 124B of the screw shaft 124. The adjustment nut 125 rotates relative to the screw shaft 124 while engaging with the external threads 124B of the screw shaft 124. Specifically, as the screw shaft 124 moves away from the polygonal rod 123, the adjustment nut 125 is rotated by the external threads 124B of the screw shaft 124 and the internal threads 125A of the adjustment nut 125.

The adjustment nut 125 is positioned between the extension portion 121A of the first casing 121 and the screw shaft 124. The outer periphery of the adjustment nut 125 has a ridge 125B provided thereon. The ridge 125B projects toward the inner wall of the extension portion 121A of the first casing 121. Between the adjustment nut 125 and the extension portion 121A of the first casing 121, an anti-vibration spring 126 is provided and energizes the ridge 125B toward the first casing 121 in the axial direction of the adjustment nut 125. The anti-vibration spring 126 is formed of a coil spring and is provided on the outer periphery of the adjustment nut 125. Since the ridge 125B of the adjustment nut 125 is energized by the anti-vibration spring 126, this can reduce the effect of vibration. A contact clutch 127 is provided between the adjustment nut 125 and the extension portion 121A of the first casing 121. When the ridge 125B is pushed toward the left caliper lever 40 in the axial direction, the contact clutch 127 contacts the surface of the ridge 125B that is perpendicular to the axial direction to control rotation of the adjustment nut 125. A cylindrical cover 128 covering the first casing 121 is fixedly attached to the second casing 122.

As shown in Figs. 2, 4 and 5, a wire attachment portion 130 is mounted to a portion of the screw shaft 124 that is close to the first casing 121. The wire 96 is connected to the wire attachment portion 130. A one-way clutch 131 is provided between the adjustment nut 125 and the extension portion 121A of the first casing 121. The wire attachment portion 130 is an annular member having an arc-shaped surface and fixedly attached to the one-way clutch 131. The one-way clutch 131 and the wire attachment portion 130 can integrally rotate. The end of the wire 96 is fixedly attached to the arc-shaped surface of the wire attachment portion 130 and connected such that the wire 96 extends in the direction tangent to the arc-shaped surface.

The one-way clutch 131 permits the adjustment nut 125 to rotate such that the gap adjuster 101 is elongated but prevents the adjustment nut 125 from rotating such that the gap adjuster 101 is shortened. A spring 132 or energizing member is attached to the one-way clutch 131. The spring 132 exerts an energizing force in such a direction that the wire 96 can return to a state where it is not pulled by the displaceable portion 91. If the wire 96 is pulled by the displaceable portion 91, the one-way clutch 131 and the wire attachment portion 130 rotate clockwise as seen from the left side, so that the spring 132 is compressed. If the wire 96 is released from being pulled, the energizing force from the spring 132 rotates the one-way clutch 131 and the wire attachment portion 130, as well as the adjustment nut 125, in a reversed direction (anti-clockwise), elongating the gap adjuster 101. If the gap adjuster 101 is elongated, the gap between the brake pads 12 and the disc 11 is shortened. Once the displaceable portion 91 is released from being in contact with the first rod 73, the spring 132 causes the displaceable portion 91 to return to the original position where it does not pull the wire 96. The wire attachment portion 130, the one-way clutch 131 and the spring 132 together serve as an input unit.

Next, the operation of the brake caliper 20 will now be described. With additional reference to Fig. 2, a description is given of the operation of the brake caliper 20 and the gap adjustment device 100 performed before the brake pads 12 are worn.

As shown in Fig. 2, the brake caliper 20 is configured such that compressed air is fed into the first space 75 in the service brake cylinder 70 of the cylinder device 15 to actuate the service brake. The first rod 73 of the service brake cylinder 70 moves in such a direction that it projects from the first cylinder chamber 71 along with the first piston 72, thereby driving the operation lever 35A clockwise via the roller 35B. Here, if the brake pads 12 have not worn off very much and the amount of movement (protrusion) of the first rod 73 is thus less than a predetermined value, the first rod 73 does not touch the displaceable portion 91.

As the first rod 73 moves in such a direction that it projects from the first cylinder chamber 71, the operation lever 35A rotates clockwise along with the left rotation pin 35. The clockwise rotation of the left rotation pin 35 causes the left caliper lever 40 to rotate about the rotational axis 44 in such a direction that the left brake pad 12 contacts the disc 11, as a result of which the left brake pad 12 contacts the disc 11.

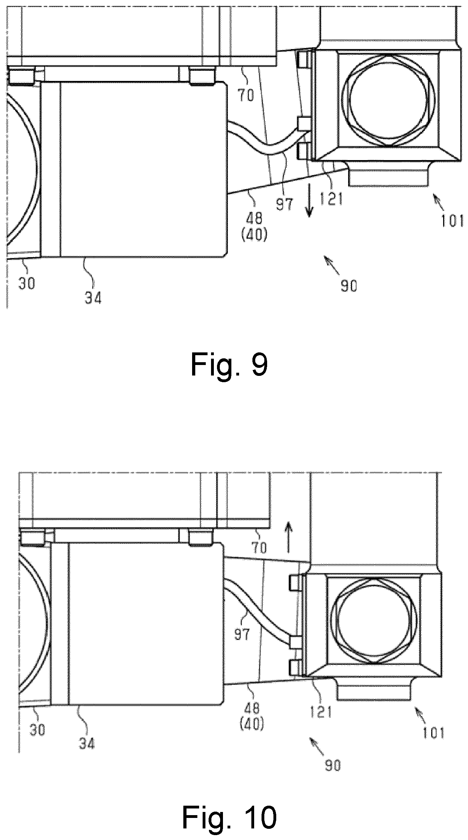

As shown in Figs. 9 and 10, the left caliper lever 40 rotates around the rotational axis 44 if the first rod 73 projects. As a result, the left caliper lever 40 and the gap adjuster 101 are displaced relative to the body 30 and the casing 34. The outer tube 97, through which the wire 96 runs, may bend while moving as the casing 34 and the gap adjuster 101 are displaced relative to each other but is not pulled. The wire 96, which runs through the outer tube 97, is not pulled since it bends while moving together with the outer tube 97.

Subsequently, as shown in Fig 2, after the left brake pad 12 contacts the disc 11, the left caliper lever 40 rotates clockwise about the pad rotation pin 43. When the left caliper lever 40 rotates about the pad rotation pin 43, the right caliper lever 50 rotates counterclockwise about the right rotation pin 36 via the rotational axis 44, the gap adjuster 101 and the rotational axis 54, as a result of which the right brake pad 12 contacts the disc 11.

When the compressed air is discharged from the second space 85 of the parking brake cylinder 80 and the second rod 83 projects from the second cylinder chamber 81, the second rod 83 pushes the first piston 72 and the first rod 73, resulting in the same operation as when the first rod 73 projects from the first cylinder chamber 71.

The following now describes how the brake caliper 20 and the gap adjustment device 100 work with the brake pads 12 having worn out. When the brake pads 12 are worn out, the service brake cylinder 70 operates in the same manner with compressed air fed thereto. The amount of movement of the first rod 73 increases as the amount of wear of the brake pads 12 increases. If the amount of wear of the brake pads 12 increases to such an extent that the amount of movement of the first rod 73 becomes equal to or greater than a predetermined value, the gap adjustment device 100 comes into operation. Specifically, the gap adjuster 101 is elongated to shorten the gaps between the brake pads 12 and the disc 11.

If the first rod 73 has moved a predetermined amount or more, the contact portion 73B of the first rod 73 touches the effort arm 92A of the displaceable portion 91, so that the amplifying mechanism 92 rotates around the support shaft 92C. As a result, the load arm 92B pulls the wire 96 into the casing 34. If the wire 96 is pulled by the displaceable portion 91, the wire attachment portion 130 of the gap adjuster 101 rotates clockwise together with the one-way clutch 131. Here, if the first rod 73 has moved a predetermined amount or more, this means that the gaps between the brake pads 12 and the disc 11 are equal to or greater than a prescribed value. The outer tube 97 is not displaced when the displaceable portion 91 pulls the wire 96. On the other hand, when the body 30 and the gap adjuster 101 are displaced relative to each other, the outer tube 97 cooperatively moves and is displaced.

Subsequently, in the brake caliper 20, when the left brake pad 12 and the right brake pad 12 sandwich the disc 11 to apply a compressive force to the gap adjuster 101, the screw shaft 124 tends to rotate the adjustment nut 125 in the direction for shortening. Here, the rotation of the adjustment nut 125 is controlled by the frictional force between the contact clutch 127 and the ridge 125B of the adjustment nut 125 and by the one-way clutch 131. Therefore, the screw shaft 124 does not move in the direction for shortening, and the sandwiching force exerted by the brake caliper 20 is maintained, thus generating a braking force.

Subsequently, in the brake caliper 20, when feeding of the compressed air to the service brake cylinder 70 is stopped to release the brake, the first rod 73 returns to the first cylinder chamber 71. As the first rod 73 moves in the non-braking direction, the contact portion 73B of the first rod 73 touches the load arm 92B of the displaceable portion 91, so that the amplifying mechanism 92 rotates around the support shaft 92C. As a result, the displaceable portion 91 stops pulling the wire 96. If the wire 96 is released from being pulled, the energizing force from the spring 132 rotates the one-way clutch 131 and the wire attachment portion 130, as well as the adjustment nut 125, in the reversed direction (anti-clockwise). Here, the one-way clutch 131 does not rotate in the direction for elongation. The one-way clutch 131 thus rotates anti-clockwise together with the adjustment nut 125. This enlarges the entire length of the gap adjuster 101, resulting in a larger distance between the base end portion of the left caliper lever 40 and the base end portion of the right caliper lever 50 and smaller gaps between the brake pads 12 and the disc 11.

Advantageous effects of the first embodiment will be now described.
(1) The outer tube 97 is longer than the largest distance between the body 30 and the gap adjuster 101. With such a design, even when the body 30 and the gap adjuster 101 are displaced relative to each other, the outer tube 97 and the wire 96 bend while moving and are not pulled. This prevents the relative displacement between the body 30 and the gap adjuster 101 from affecting the amount of the gap adjustment transmitted to the gap adjuster 101.
(2) Since the end of the outer tube 97 is fixedly attached to the casing 34 covering the displaceable portion 91, the wire 96 is not exposed outside the casing 34 and the outer tube 97 can reliably guide the wire 96 to the displaceable portion 91. Since the casing 34 is fixedly attached to the body 30, the end of the outer tube 97 can move together with the body 30 when the body 30 and the gap adjuster 101 are displaced relative to each other.
(3) When the first rod 73 moves a predetermined distance or more and then returns to the original position, the contact portion 73B of the first rod 73 touches the displaceable portion 91, so that the displaceable portion 91 can return to the original position and wait for the next opportunity of the movement of the first rod 73 in the braking direction.
(4) When the first rod 73 moves, the load arm 92B does not come in the way. When the first rod 73 returns to the original position, the load arm 92B can also return to the original position.
(5) The end of the wire 96 is fixedly attached to the arc-shaped surface of the wire attachment portion 130 of the gap adjuster 101, and the wire 96 extends in the direction tangent to the arc-shaped surface. Such a design can prevent, when the wire 96 is displaced, the load from being intensively applied to part of the wire attachment portion, thereby preventing the load from being intensively applied to the end of the wire 96.
(6) The output from the displaceable portion 91 is amplified by the amplifying mechanism 92, and the amplified output is output to the wire attachment portion 130 of the gap adjuster 101 via the wire 96. This can contribute to enhance the accuracy of the adjustment of the gaps between the brake pads 12 and the disc 11.
(7) The amount of the amplification can be adjusted by changing the ratio of the length of the load arm 92B to the length of the effort arm 92A.
(8) The displaceable portion 91 can be displaced by the contact portion 73B of the first rod 73 touching the effort arm 92A when moving in the output direction and touching the load arm 92B when moving in the non-output direction.
(9) Since the amplifying mechanism 92 moves the wire 96 in the direction intersecting the direction in which the first rod 73 moves, the space required to install the brake caliper 20 can be reduced when compared with the case where the wire 96 is displaced in the same direction as the first rod 73 is.
(10) Since the amplifying mechanism 92 of the displaceable portion 91 also serves as the converting unit for changing the direction, a reduced number of constituent parts can be achieved while a reduced space is required for installing the brake caliper 20.
(11) The gap adjustment is performed by pulling the wire 96 when required. The spring 132 causes the wire attachment portion 130 of the gap adjuster 101 to return to the not-pulled state. In this manner, the gap adjustment can be reliably performed.
(12) When the first rod 73 moves in the non-braking direction, the spring 132 pulls the displaceable portion 91, so that the displaceable portion 91 can return to the original position and wait for the next opportunity of the movement of the first rod 73 in the braking direction.

### <Second Embodiment>

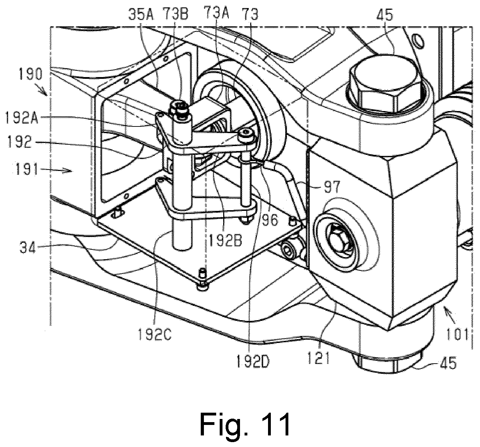

With reference to Figs. 11 to 14, a second embodiment of the brake caliper will now be described. The second embodiment is different from the first embodiment in terms of the constitution of the gap output unit. The following description will be focused on the differences from the first embodiment.

As shown in Fig. 11, the gap adjustment device 100 includes the gap adjuster 101 and a gap output unit 190 for outputting a gap to the gap adjuster 101. The gap output unit 190 includes a displaceable portion 191 and the wire 96. The displaceable portion 91 pulls the wire 96 to an extent determined by the amount of the movement of the first rod 73 of the cylinder device 15.

The body 30 has the casing 34 attached thereto, where the displaceable portion 191 is housed. The displaceable portion 191 is rotatably secured in the casing 34. When the first rod 73 moves a predetermined distance or more in the braking direction, in which the first rod 73 projects, the displaceable portion 191 is displaced by an amount determined by the amount of the movement made by the first rod 73. The wire 96 is pulled to a degree determined by the amount of the displacement of the displaceable portion 191 to transmit the amount of the gap adjustment to the wire attachment portion 130 of the gap adjuster 101. The wire 96 is longer than the distance between the body 30 and the gap adjuster 101 observed when the relative displacement between the body 30 and the gap adjuster 101 exhibits the largest value. The gap output unit 190 has the outer tube 97 for guiding the movement of the wire 96. The first one of the ends of the outer tube 97 is fixedly attached to the casing 34. The second one of the ends of the outer tube 97 is fixedly attached to the first casing 121 of the gap adjuster 101. The outer tube 97 is not displaced when the displaceable portion 191 pulls the wire 96, but is displaced when the body 30 and the gap adjuster 101 are displaced relative to each other.

As shown in Figs. 11 to 13, the displaceable portion 191 includes an amplifying mechanism 192 for amplifying the output from the first rod 73 and using the amplified output to pull the wire 96. The amplifying mechanism 192 includes an effort arm 192A and a load arm 192B. The effort and load arms 192A and 192B are integrally rotatable around a fulcrum or a support shaft 192C. The axis of the support shaft 192C extends orthogonally to the direction in which the first rod 73 moves and also orthogonally to the direction in which the left caliper lever 40 extends. The effort arm 192A is rotatable around the fulcrum when acted upon by the output from the first rod 73. The load arm 192B is rotatable around the fulcrum when acted upon by the rotation of the effort arm 192A. At the tip end of the load arm 192B, an attachment portion 192D is provided to allow the wire 96 to be attached thereto. The attachment portion 192D extends parallel to the support shaft 192C. To the attachment portion 192D, the wire 96 is rotatably connected. The load arm 192B pulls the wire 96 via the attachment portion 192D. The length L3 of the effort arm 192A is less than the length L4 of the load arm 192B (L3 < L4). With such a design, the displacement input from the first rod 73 to the effort arm 192A is amplified and the amplified displacement is output from the load arm 192B. The degree of the amplification can be adjusted by changing the ratio of the length L3 of the effort arm 192A to the length L4 of the load arm 192B.

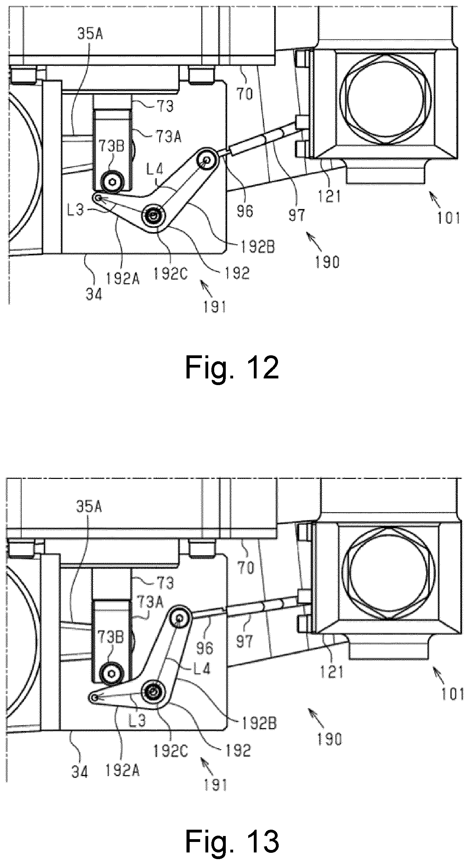

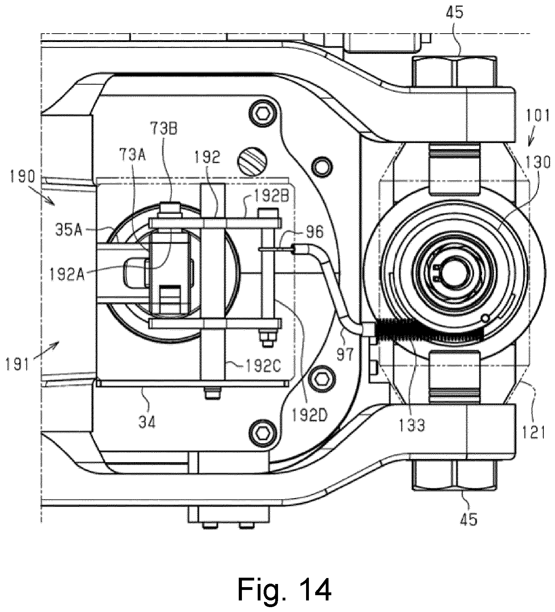

As shown in Fig. 14, the first rod 73 includes the contact portion 73B configured to contact the effort arm 192A of the displaceable portion 191. The contact portion 73B is a rotatable roller and attached to the upper portion of the housing portion 73A of the first rod 73. The contact portion 73B is positioned within the displaceable range of the first rod 73 and also within the displaceable range of the amplifying mechanism 192. The contact portion 73B projects into the displaceable range of the effort arm 192A. As shown in Figs. 12 and 13, when the first rod 73 moves a predetermined distance or more in the braking direction, the contact portion 73B contact the effort arm 192A of the displaceable portion 191, thereby rotating the amplifying mechanism 192 anti-clockwise as seen from above. The load arm 192B does not touch the contact portion 73B until the first rod 73 moves the predetermined distance, and is positioned on the path to be followed by the contact portion 73B once the first rod 73 has moved the predetermined distance or more. When the first rod 73 has moved the predetermined distance or more in the braking direction and then returns to the original position, the contact portion 73B contacts the load arm 192B of the displaceable portion 191, thereby rotating the amplifying mechanism 192 clockwise as seen from above. As a result, the amplifying mechanism 192 returns to the original position.

As shown in Fig. 14, the end of the wire 96 is fixedly attached to the arc-shaped surface of the wire attachment portion 130, and the wire 96 extends in the direction tangent to the arc-shaped surface. A spring 133 is attached to the end of the wire 96 for pulling the wire 96 such that the wire 96 can be accommodated in the gap adjuster 101. The spring 133 serves as an energizing member. As shown in Fig. 12, when moving in the non-braking direction opposite to the braking direction, the contact portion 73B is released from being in contact with the effort arm 192A of the displaceable portion 191. The wire 96 is then pulled by the spring 133 to be accommodated into the gap adjuster 101, as a result of which the amplifying mechanism 192 of the displaceable portion 191 is rotated clockwise as seen from above. The wire 96 moves in the left-right direction in Figs. 12 and 13. The first rod 73 moves in the top-bottom direction in Figs. 12 and 13. This means that the amplifying mechanism 192 also serves as a converting unit rotatable around the support shaft 192C to convert the movement of the first rod 73 into the movement of the wire 96 in the direction intersecting the direction of the movement of the first rod 73.

The following now describes how the brake caliper 20 and the gap adjustment device 100 work with the brake pads 12 having worn out. The first and second embodiments have some common features, which are not described in the following.

If the first rod 73 has moved a predetermined amount or more, the contact portion 73B of the first rod 73 touches the effort arm 192A of the displaceable portion 191, so that the amplifying mechanism 192 rotates around the support shaft 192C. As a result, the load arm 192B pulls the wire 96 into the casing 34. If the wire 96 is pulled by the displaceable portion 191, the wire 96 is pulled out of the gap adjuster 101. This causes the wire attachment portion 130 to rotate clockwise together with the one-way clutch 131. The outer tube 97 is not displaced when the displaceable portion 191 pulls the wire 96, but is displaced cooperatively when the body 30 and the gap adjuster 101 are displaced relative to each other.

Subsequently, in the brake caliper 20, when the left brake pad 12 and the right brake pad 12 sandwich the disc 11 to apply a compressive force to the gap adjuster 101, the screw shaft 124 tends to rotate the adjustment nut 125 in the direction for shortening. Here, the rotation of the adjustment nut 125 is controlled by the frictional force between the contact clutch 127 and the ridge 125B of the adjustment nut 125 and by the one-way clutch 131. Therefore, the screw shaft 124 does not move in the direction for shortening, and the sandwiching force exerted by the brake caliper 20 is maintained, thus generating a braking force.

Subsequently, in the brake caliper 20, when feeding of the compressed air to the service brake cylinder 70 is stopped to release the brake, the first rod 73 returns to the first cylinder chamber 71. As the first rod 73 moves in the non-braking direction, the contact portion 73B of the first rod 73 is released from being in contact with the effort arm 192A of the displaceable portion 191. The wire 96 is pulled by the spring 133 into the gap adjuster 101, and the amplifying mechanism 192 rotates around the support shaft 192C, so that the wire 96 is released from being pulled by the displaceable portion 191. Once the wire 96 is released from being pulled, the energizing force from the spring 132 rotates the one-way clutch 131 and the wire attachment portion 130, as well as the adjustment nut 125, in the reversed direction (anti-clockwise). Here, the one-way clutch 131 does not rotate in the direction for elongation. The one-way clutch 131 thus rotates anti-clockwise together with the adjustment nut 125. This enlarges the entire length of the gap adjuster 101, resulting in a larger distance between the base end portion of the left caliper lever 40 and the base end portion of the right caliper lever 50 and smaller gaps between the brake pads 12 and the disc 11.

Advantageous effects of the second embodiment will be now described. The following advantageous effects are obtained in addition to the advantageous effects (1), (2) and (4) to (12) of the first embodiment.

(13) When the first rod 73 moves in the non-braking direction, the spring 133 pulls the displaceable portion 191, so that the displaceable portion 191 can return to the original position and wait for the next opportunity of the movement of the first rod 73 in the braking direction.

### <Third Embodiment>

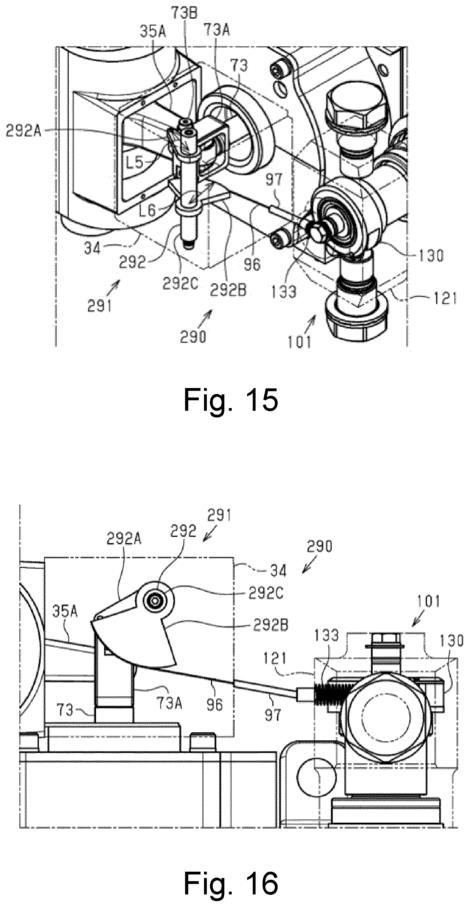

With reference to Figs. 15 to 16, a third embodiment of the brake caliper will now be described. The third embodiment is different from the first embodiment in terms of the constitution of the gap output unit. The following description will be focused on the differences from the first embodiment.

As shown in Figs. 15 and 16, the gap adjustment device 100 includes the gap adjuster 101 and a gap output unit 290 for outputting a gap to the gap adjuster 101. The gap output unit 290 includes a displaceable portion 291 and the wire 96. The displaceable portion 291 pulls the wire 96 to an extent determined by the amount of the movement of the first rod 73 of the cylinder device 15.

The body 30 has the casing 34 attached thereto, where the displaceable portion 291 is housed. The displaceable portion 291 is rotatably secured in the casing 34. The displaceable portion 291 is displaced by an amount determined by the amount of the movement made by the first rod 73 if the first rod 73 moves a predetermined distance or more in the braking direction in which the first rod 73 projects. The wire 96 is pulled to an extent determined by the amount of the displacement of the displaceable portion 291 to transmit the amount of the gap adjustment to the wire attachment portion 130 of the gap adjuster 101. The wire 96 is longer than the distance between the body 30 and the gap adjuster 101 observed when the relative displacement between the body 30 and the gap adjuster 101 exhibits the largest value. The gap output unit 290 has the outer tube 97 for guiding the wire 96 therein. The first one of the ends of the outer tube 97 is fixedly attached to the casing 34. The second one of the ends of the outer tube 97 is fixedly attached to the first casing 121 of the gap adjuster 101. The outer tube 97 is not displaced when the displaceable portion 291 pulls the wire 96, but is displaced when the body 30 and the gap adjuster 101 are displaced relative to each other.

The displaceable portion 291 includes an amplifying mechanism 292 for amplifying the output from the first rod 73 and using the amplified output to pull the wire 96. The amplifying mechanism 292 include an effort arm 292A and a load arm 292B. The effort and load arms 292A and 292B are integrally rotatable together with a fulcrum or a support shaft 292C. The axis of the support shaft 292C extends orthogonally to the direction in which the first rod 73 moves and also orthogonally to the direction in which the left caliper lever 40 extends. The effort arm 292A is rotatable together with the support shaft 292C when acted upon by the output from the first rod 73. The load arm 292B is a fan-shaped member and has an arc-shaped surface. The end of the wire 96 is fixedly attached to the arc-shaped surface of the load arm 292B, and the wire 96 extends in the direction tangent to the arc-shaped surface. The load arm 292B is rotatable together with the support shaft 292C when acted upon by the rotation of the effort arm 292A. The length L5 of the effort arm 292A is less than the length L6 of the load arm 292B (L5 < L6). With such a design, the displacement input from the first rod 73 to the effort arm 292A is amplified and the amplified displacement is output from the load arm 292B. The degree of the amplification can be adjusted by changing the ratio of the length L5 of the effort arm 292A to the length L6 of the load arm 292B.

The first rod 73 includes the contact portion 73B configured to contact the effort arm 292A of the displaceable portion 291. The contact portion 73B is a rotatable roller and attached to the upper portion of the housing portion 73A of the first rod 73. The contact portion 73B is positioned within the displaceable range of the first rod 73 and also within the displaceable range of the amplifying mechanism 292. The contact portion 73B projects into the displaceable range of the effort arm 292A. When the first rod 73 moves a predetermined distance or more in the braking direction, the contact portion 73B contacts the effort arm 292A of the displaceable portion 291, thereby rotating the amplifying mechanism 292 anti-clockwise as seen from above.

As shown in Fig. 15, the end of the wire 96 is fixedly attached to the arc-shaped surface of the wire attachment portion 130, and the wire 96 extends in the direction tangent to the arc-shaped surface. The spring 133 is attached to the end of the wire 96 for pulling the wire 96 such that the wire 96 can be accommodated in the gap adjuster 101. The spring 133 serves as an energizing member. When moving in the non-braking direction opposite to the braking direction, the contact portion 73B is released from being in contact with the effort arm 292A of the displaceable portion 291. The wire 96 is then pulled by the spring 133 to be accommodated into the gap adjuster 101, as a result of which the amplifying mechanism 292 of the displaceable portion 291 is rotated clockwise as seen from above. The wire 96 moves in the left-right direction in Fig. 16. The first rod 73 moves in the top-bottom direction in Fig. 16. This means that the amplifying mechanism 292 also serves as a converting unit rotatable around the support shaft 292C to convert the movement of the first rod 73 into the movement of the wire 96 in the direction intersecting the direction of the movement of the first rod 73.

The following now describes how the brake caliper 20 and the gap adjustment device 100 work with the brake pads 12 having worn out. The first and third embodiments have some common features, which are not described in the following.

If the first rod 73 has moved a predetermined amount or more, the contact portion 73B of the first rod 73 touches the effort arm 292A of the displaceable portion 291, so that the amplifying mechanism 292 rotates around the support shaft 292C. As a result, the load arm 292B pulls the wire 96 into the casing 34. If the wire 96 is pulled by the displaceable portion 291, the wire 96 is pulled out of the gap adjuster 101. This causes the wire attachment portion 130 to rotate clockwise together with the one-way clutch 131. The outer tube 97 is not displaced when the displaceable portion 291 pulls the wire 96, but is displaced cooperatively when the body 30 and the gap adjuster 101 are displaced relative to each other.

Subsequently, in the brake caliper 20, when the left brake pad 12 and the right brake pad 12 sandwich the disc 11 to apply a compressive force to the gap adjuster 101, the screw shaft 124 tends to rotate the adjustment nut 125 in the direction for shortening. Here, the rotation of the adjustment nut 125 is controlled by the frictional force between the contact clutch 127 and the ridge 125B of the adjustment nut 125 and by the one-way clutch 131. Therefore, the screw shaft 124 does not move in the direction for shortening, and the sandwiching force exerted by the brake caliper 20 is maintained, thus generating a braking force.

Subsequently, in the brake caliper 20, when feeding of the compressed air to the service brake cylinder 70 is stopped to release the brake, the first rod 73 returns to the first cylinder chamber 71. As the first rod 73 moves in the non-braking direction, the contact portion 73B of the first rod 73 is released from being in contact with the effort arm 292A of the displaceable portion 291. The wire 96 is pulled by the spring 133 into the gap adjuster 101 and the amplifying mechanism 292 rotates around the support shaft 292C. This releases the wire 96 from being pulled by the displaceable portion 291. If the wire 96 is released from being pulled, the energizing force from the spring 132 rotates the one-way clutch 131 and the wire attachment portion 130, as well as the adjustment nut 125, in the reversed direction (anti-clockwise). Here, the one-way clutch 131 does not rotate in the direction for elongation. The one-way clutch 131 thus rotates anti-clockwise together with the adjustment nut 125. This enlarges the entire length of the gap adjuster 101, resulting in a larger distance between the base end portion of the left caliper lever 40 and the base end portion of the right caliper lever 50 and smaller gaps between the brake pads 12 and the disc 11.

Advantageous effects of the third embodiment will be now described. The third embodiment produces the following advantageous effects in addition to the effects (1), (2) (4) to (12) achieved by the first embodiment and the effect (13) achieved by the second embodiment.

(14) The end of the wire 96 is fixedly attached to the arc-shaped surface of the displaceable portion 291. Such a design can prevent, when the wire 96 is displaced, the load from being intensively applied to part of the displaceable portion 291, thereby preventing the load from being intensively applied to the end of the wire 96.

### <Fourth Embodiment>

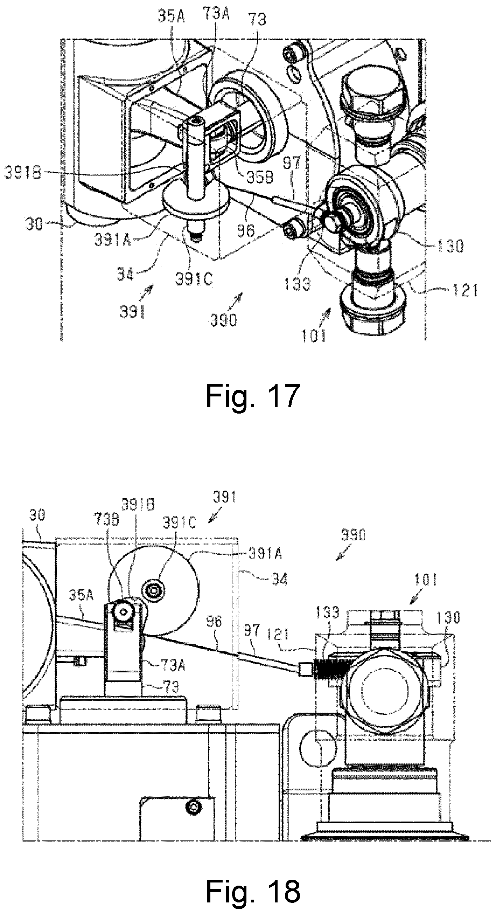

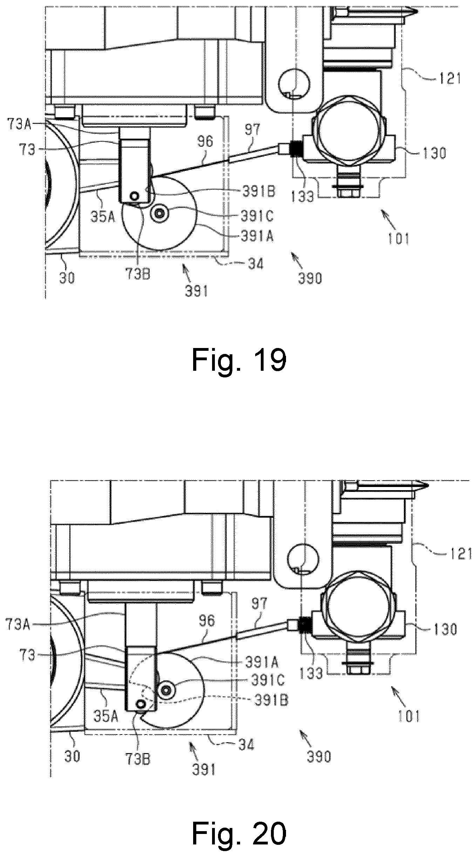

With reference to Figs. 17 to 20, a fourth embodiment of the brake caliper will now be described. The fourth embodiment is different from the first embodiment in terms of the constitution of the gap output unit. The following description will be focused on the differences from the first embodiment.

As shown in Figs. 17 to 20, the gap adjustment device 100 includes the gap adjuster 101 and a gap output unit 390 for outputting a gap to the gap adjuster 101. The gap output unit 390 includes a displaceable portion 391 and the wire 96. The displaceable portion 391 pulls the wire 96 to an extent determined by the amount of the movement of the first rod 73 of the cylinder device 15.

The body 30 has the casing 34 attached thereto, where the displaceable portion 391 is housed. The displaceable portion 391 is rotatably secured in the casing 34. The displaceable portion 391 is displaced by an amount determined by the amount of the movement made by the first rod 73, if the first rod 73 moves a predetermined distance or more in the braking direction in which the first rod 73 projects. The wire 96 is pulled to an extent determined by the amount of the displacement of the displaceable portion 391 to transmit the amount of the gap adjustment to the wire attachment portion 130 of the gap adjuster 101. The wire 96 is longer than the distance between the body 30 and the gap adjuster 101 observed when the relative displacement between the body 30 and the gap adjuster 101 exhibits the largest value. The gap output unit 390 has the outer tube 97 for guiding the wire 96 therein. The first one of the ends of the outer tube 97 is fixedly attached to the casing 34. The second one of the ends of the outer tube 97 is fixedly attached to the first casing 121 of the gap adjuster 101. The outer tube 97 is not displaced when the displaceable portion 391 pulls the wire 96, but is displaced when the body 30 and the gap adjuster 101 are displaced relative to each other.

The displaceable portion 391 includes an input/output portion 391A and a support shaft 391C. The input/output portion 391A and the support shaft 391C are integrally rotatable. The axis of the support shaft 391C extends orthogonally to the direction in which the first rod 73 moves and also orthogonally to the direction in which the left caliper lever 40 extends. The input/output portion 391A has a depression 391B configured to receive and touch the first rod 73. The input/output portion 391A is a disc-shaped member and has an arc-shaped surface. The end of the wire 96 is fixedly attached to the arc-shaped surface of the input/output portion 391A, and the wire 96 extends in the direction tangent to the arc-shaped surface.

The first rod 73 includes the contact portion 73B configured to contact the depression 391B of the input/output portion 391A of the displaceable portion 391. The contact portion 73B is a rotatable roller and attached to the lower portion of the housing portion 73A of the first rod 73. The contact portion 73B is positioned within the displaceable range of the first rod 73 and also within the displaceable range of the displaceable portion 391. The contact portion 73B projects into the displaceable range of the input/output portion 391A. When the first rod 73 moves a predetermined distance or more in the braking direction, the contact portion 73B contacts the depression 391B of the input/output portion 391A of the displaceable portion 391, thereby rotating the displaceable portion 391 anti-clockwise as seen from above.

The end of the wire 96 is fixedly attached to the arc-shaped surface of the wire attachment portion 130, and the wire 96 extends in the direction tangent to the arc-shaped surface. The spring 133 is attached to the end of the wire 96 for pulling the wire 96 such that the wire 96 can be accommodated in the gap adjuster 101. The spring 133 serves as an energizing member. When moving in the non-braking direction opposite to the braking direction, the contact portion 73B is released from being in contact with the input/output portion 391A of the displaceable portion 391. The wire 96 is then pulled by the spring 133 to be accommodated into the gap adjuster 101, as a result of which the input/output portion 391A of the displaceable portion 391 is rotated clockwise as seen from above. The wire 96 moves in the left-right direction in Fig. 18. The first rod 73 moves in the top-bottom direction in Fig. 18. This means that the displaceable portion 391 also serves as a converting unit rotatable around the support shaft 391C to convert the movement of the first rod 73 into the movement of the wire 96 in the direction intersecting the direction of the movement of the first rod 73.

The following now describes how the brake caliper 20 and the gap adjustment device 100 work with the brake pads 12 having worn out. The first and fourth embodiments have some common features, which are not described in the following.

If the first rod 73 has moved a predetermined amount or more, the contact portion 73B of the first rod 73 touches the input/output portion 391A of the displaceable portion 391, so that the displaceable portion 391A rotates around the support shaft 391C. As a result, the input/output portion 391A pulls the wire 96 into the casing 34. If the wire 96 is pulled by the displaceable portion 391, the wire 96 is pulled out of the gap adjuster 101. This causes the wire attachment portion 130 to rotate clockwise together with the one-way clutch 131. The outer tube 97 is not displaced when the displaceable portion 391 pulls the wire 96, but is displaced cooperatively when the body 30 and the gap adjuster 101 are displaced relative to each other.

Subsequently, in the brake caliper 20, when the left brake pad 12 and the right brake pad 12 sandwich the disc 11 to apply a compressive force to the gap adjuster 101, the screw shaft 124 tends to rotate the adjustment nut 125 in the direction for shortening. Here, the rotation of the adjustment nut 125 is controlled by the frictional force between the contact clutch 127 and the ridge 125B of the adjustment nut 125 and by the one-way clutch 131. Therefore, the screw shaft 124 does not move in the direction for shortening, and the sandwiching force exerted by the brake caliper 20 is maintained, thus generating a braking force.

Subsequently, in the brake caliper 20, when feeding of the compressed air to the service brake cylinder 70 is stopped to release the brake, the first rod 73 returns to the first cylinder chamber 71. As the first rod 73 moves in the non-braking direction, the contact portion 73B of the first rod 73 is released from being in contact with the input/output portion 391A of the displaceable portion 391. The wire 96 is then pulled by the spring 133 to be accommodated into the gap adjuster 101, so that the input/output portion 391A rotates around the support shaft 391C. As a result, the wire 96 is released from being pulled by the displaceable portion 391. If the wire 96 is released from being pulled, the energizing force from the spring 132 rotates the one-way clutch 131 and the wire attachment portion 130, as well as the adjustment nut 125, in the reversed direction (anti-clockwise). Here, the one-way clutch 131 does not rotate in the direction for elongation. The one-way clutch 131 thus rotates anti-clockwise together with the adjustment nut 125. This enlarges the entire length of the gap adjuster 101, resulting in a larger distance between the base end portion of the left caliper lever 40 and the base end portion of the right caliper lever 50 and smaller gaps between the brake pads 12 and the disc 11.

Advantageous effects of the fourth embodiment will be now described. According to the fourth embodiment, the advantageous effects (1), (2), (4) to (9), (11) and (12) of the first embodiment, (13) of the second embodiment and (14) of the third embodiment are obtained.

### <Other Embodiments>

The foregoing embodiments can be modified as described below. The above embodiments and the following modifications can be implemented in combination to the extent where they are technically consistent with each other.

The second to fourth embodiments may be practiced without the spring 133 as long as any energizing member is provided to energize the wire 96 toward the gap adjuster 101. The foregoing embodiments may be practiced without the spring 132 as long as any energizing member is provided to energize the wire 96 toward the gap adjuster 101.

In the foregoing embodiments, the shape of the displaceable portion may be modified in any manner. In the first to third embodiments, the amplifying mechanism of the displaceable portion also serves as the converting unit for changing the direction. Separately from the amplifying mechanism of the displaceable portion, however, a converting unit may be provided for changing the direction.

In the foregoing embodiments, the first rod 73 and the wire 96 are configured to move in intersecting directions. The first rod 73 and the wire 96, however, may be configured to move in the same direction.

In the first embodiment, the amplifying mechanism 92 returns to the original position since the contact portion 73B touches the load arm 92B on the way back to the original position. Alternatively, the contact portion 73B may not be used and an energizing member such as a spring may be provided to energize the amplifying mechanism 92 toward the original position. With such an alternative configuration, the energizing member puts the amplifying mechanism 92 back to the original position once the contact portion 73B loses the contact with the effort arm 92A.

In the first to third embodiments, the amount of the movement of the first rod 73 is amplified by the load arm having a greater length than the effort arm. The amplification, however, may be accomplished in other ways. In the first to third embodiments, the amount of the movement of the first rod 73 is amplified by the amplifying mechanism and the amplified amount of the movement is transmitted to the wire 96. The amount of the movement of the first rod 73, however, may not be amplified by the amplifying mechanism.

The foregoing embodiments employ the cylinder device 15 as the actuator, but may use other devices such as motor devices as the actuator. The foregoing embodiments describe a plurality of physically separate constituent parts. They may be combined into a single part, and any one of them may be divided into a plurality of physically separate constituent parts. Irrespective of whether or not the constituent parts are integrated, they are acceptable as long as they are configured to solve the problems.

### LIST OF REFERENCE NUMBERS

- 11: disc
- 12: brake pad
- 15: cylinder device
- 20: brake caliper
- 21: bracket
- 21A: first bracket
- 21B: second bracket
- 22: coupling pin
- 30: body
- 31: base portion
- 32: first support portion
- 33: second support portion
- 33A: opening
- 34: casing
- 35: left rotation pin
- 35A: operation lever
- 35B: roller
- 36: right rotation pin
- 40: left caliper lever
- 42: pad attachment member
- 43: pad rotation pin
- 44: rotational axis
- 45: bolt
- 46: left lever coupling pin
- 47: left upper lever
- 48: left lower lever
- 50: right caliper lever
- 52: pad attachment member
- 53: pad rotation pin
- 54: rotational axis
- 55: bolt
- 56: right lever coupling pin
- 57: right upper lever
- 58: right lower lever
- 70: service brake cylinder
- 73: first rod
- 73A: housing portion
- 73B: contact portion
- 80: parking brake cylinder
- 90: gap output unit
- 91: displaceable portion
- 92: amplifying mechanism
- 92A: effort arm
- 92B: load arm
- 92C: support shaft (fulcrum)
- 96: wire
- 97: outer tube
- 100: gap adjustment device
- 101: gap adjuster
- 121: first casing
- 121A: extension portion
- 122: second casing
- 122A: support spring
- 123: polygonal rod
- 123A: space
- 123B: hexagonal portion
- 124: screw shaft
- 124A: space
- 124B: external thread
- 124C: hexagonal portion
- 125: adjustment nut
- 125A: internal thread
- 126: anti-vibration spring
- 127: contact clutch
- 128: cover
- 130: wire attachment portion
- 131: one-way clutch
- 132: spring
- 133: spring
- 190: gap output unit
- 191: displaceable portion
- 192: amplifying mechanism
- 192A: effort arm
- 192B: load arm
- 192C: support shaft (fulcrum)
- 192D: attachment portion
- 290: gap output unit
- 291: displaceable portion
- 292: amplifying mechanism
- 292A: effort arm
- 292B: load arm
- 292C: support shaft (fulcrum)
- 390: gap output unit
- 391: displaceable portion
- 391A: input/output portion
- 391B: depression
- 391C: support shaft (fulcrum)

## Claims

1. A brake caliper (20) comprising:
two caliper levers (40, 50) each retaining a brake pad (12);
an output rod (73) for outputting a force to move the caliper levers (40, 50) such that a single disc (11) is sandwiched between the two brake pads (12);
a gap adjuster (101) fixedly attached between the two caliper levers (40, 50), the gap adjuster (101) being configured to adjust gaps between the brake pads (12) and the disc (11);
a body (30) retaining the two caliper levers (40, 50) in a movable manner and retaining the output rod (73);
a displaceable portion (91, 191, 291, 391) fixedly attached to the body (30), the displaceable portion (91, 191, 291, 391) being displaceable when acted upon by the output rod (73) if the output rod (73) moves a predetermined distance or more; **characterized in that** the brake caliper further comprises:
a guide member (97) having ends fixedly attached to the body (30) and the gap adjuster (101), the guide member (97) being formed of a tubular flexible member longer than a distance between the body (30) and the gap adjuster (101) observed when relative displacement between the body (30) and the gap adjuster (101) exhibits a largest value; and
a transmission member (96) extending through the guide member (97) to connect together the displaceable portion (91, 191, 291, 391) and an input unit (130, 131, 132) of the gap adjuster (101), the transmission member (96) being configured to transmit a displacement of the displaceable portion (91, 191, 291, 391) to the input unit (130, 131, 132) in order to actuate the gap adjuster (101).

2. The brake caliper (20) of claim 1, comprising
a casing (34) fixedly attached to the body (30) and covering the displaceable portion (91, 191, 291, 391),
wherein one of the ends of the guide member (97) that is fixedly attached to the body (30) is fixedly attached to the casing (34).

3. The brake caliper (20) of claim 1 or 2, comprising
a contact portion (73B) movable together with the output rod (73), the contact portion (73B) being configured to touch the displaceable portion (91) when the output rod (73) moves the predetermined distance or more and then returns to an original position, thereby returning the displaceable portion (91) to an original position.

4. The brake caliper (20) of claim 3,
wherein the displaceable portion (91) includes a rotatable arm (92B), and
wherein the arm (92B) does not touch the contact portion (73B) until the output rod (73) moves the predetermined distance and is positioned on a path to be followed by the contact portion (73B) once the output rod (73) has moved the predetermined distance or more.

5. The brake caliper (20) of any one of claims 1 to 4,
wherein the input unit (130) of the gap adjuster (101) has an arc-shaped surface,
wherein an end of the transmission member (96) is fixedly attached to the arc-shaped surface of the input unit (130) of the gap adjuster (101), and
wherein the transmission member (96) extends in a direction tangent to the arc-shaped surface.

6. The brake caliper (20) according to any one of claims 1 to 5,
wherein the displaceable portion (291, 391) has an arc-shaped surface,
wherein an end of the transmission member (96) is fixedly attached to the arc-shaped surface of the displaceable portion (291, 391), and
wherein the transmission member (96) extends in a direction tangent to the arc-shaped surface.

7. The brake caliper (20) of any one of claims 1 to 6, wherein the displaceable portion (91, 191, 291) includes an amplifying mechanism (92, 192, 292) for amplifying the output from the output rod (73) and using the amplified output to pull the transmission member (96).

8. The brake caliper (20) of claim 7,
wherein the amplifying mechanism (92, 192, 292) includes an effort arm (92A, 192A, 292A) rotatable around a fulcrum when acted upon by the output from the output rod (73) and a load arm (92B, 192B, 292B) rotatable around the fulcrum when acted upon by the output from the output rod (73) to pull the transmission member (96), and
wherein the effort arm (92A, 192A, 292A) has a shorter length than the load arm (92B, 192B, 292B).

9. The brake caliper (20) of claim 8, wherein the output rod (73) includes a contact portion (73B) configured to touch the effort arm (92A) when the output rod (73) moves in an output direction in which the output is made and to touch the load arm (92B) to return the displaceable portion (91) to an original position when the output rod (73) moves in a non-output direction in which no output is made.

10. The brake caliper (20) of any one of claims 1 to 8, wherein the displaceable portion (91, 191, 291, 391) includes a converting unit (92, 192, 292, 391) for converting movement of the output rod (73) into movement of the transmission member (96) in a direction intersecting a direction in which the output rod (73) is movable.

11. The brake caliper (20) of claim 10, wherein the converting unit (92, 192, 292) also serves as an amplifying mechanism (92, 192, 292) for amplifying the output from the output rod (73) and transmitting the amplified output to the transmission member (96).

12. The brake caliper (20) of any one of claims 1 to 11, comprising
an energizing member (132) provided in an input unit of the gap adjuster (101), the energizing member (132) being configured to pull the transmission member (96).

13. The brake caliper (20) of claim 12,
wherein the input unit of the gap adjuster (101) includes a one-way clutch (131) connected to the transmission member (96), and
wherein, when the transmission member (96) is pulled by the displaceable portion (91, 191, 291, 391), the one-way clutch (131) rotates, and when the displaceable portion (91, 191, 291, 391) returns to an original position, an energizing force from the energizing member (132) rotates the input unit in an opposite direction, thereby elongating the gap adjuster (101) and accordingly reducing the gaps between the brake pads (12) and the disc (11).

14. The brake caliper (20) of any one of claims 1 to 13,
wherein the transmission member (96) is a wire, and
wherein the guide member (97) is shaped like a tube and the wire is displaceable within the guide member (97).

15. The brake caliper (20) of claim 1, wherein
an actuator (15) includes the output rod (73) for outputting a force to rotate the caliper levers (40, 50);
wherein the displaceable portion (91, 191, 291) includes an effort arm (92A, 192A, 292A) rotatable around a fulcrum when acted upon by the output from the output rod (73), a load arm (92B, 192B, 292B) rotatable around the fulcrum when acted upon by the output to displace the transmission member (96), and a converting unit (92, 192, 292) for converting movement of the output rod (73) into movement of the transmission member (96) in a direction intersecting a direction in which the output rod (73) is movable, and the effort arm (92A, 192A, 292A) has a shorter length than the load arm (92B, 192B, 292B), so that the displaceable portion (91, 191, 291) amplifies the output from the output rod (73) and uses the amplified output to displace the transmission member (96).

## Patentansprüche

1. Ein Bremssattel (20), umfassend:
zwei Bremssattelhebel (40, 50), die jeweils einen Bremsbelag (12) halten;
eine Ausgangsstange (73) zum Ausgeben einer Kraft, um die Bremssattelhebel (40, 50) so zu bewegen, dass eine einzelne Scheibe (11) zwischen den zwei Bremsbelägen (12) eingeklemmt wird;
einen Spalteinsteller (101), der fest zwischen den zwei Bremssattelhebeln (40, 50) angebracht ist, wobei der Spalteinsteller (101) so konfiguriert ist, dass er die Spalte zwischen den Bremsbelägen (12) und der Scheibe (11) einstellt;
einen Körper (30), der die zwei Bremssattelhebel (40, 50) beweglich hält und die Ausgangsstange (73) hält;
einen verschiebbaren Abschnitt (91, 191, 291, 391), der fest an dem Körper (30) angebracht ist, wobei der verschiebbare Abschnitt (91, 191, 291, 391) verschiebbar ist, wenn er von der Abtriebsstange (73) beaufschlagt wird, wenn sich die Ausgangsstange (73) um einen vorgegebenen Abstand oder mehr bewegt; **dadurch gekennzeichnet, dass** der Bremssattel ferner umfasst:
ein Führungselement (97), das Enden aufweist, die fest an dem Körper (30) und dem Spalteinsteller (101) angebracht sind, wobei das Führungselement (97) aus einem rohrförmigen flexiblen Element gebildet ist, das länger ist als ein Abstand zwischen dem Körper (30) und dem Spalteinsteller (101), der beobachtet wird, wenn die relative Verschiebung zwischen dem Körper (30) und dem Spalteinsteller (101) einen größten Wert aufweist; und
ein Übertragungselement (96), das sich durch das Führungselement (97) erstreckt, um den verschiebbaren Abschnitt (91, 191, 291, 391) und eine Eingangseinheit (130, 131, 132) des Spalteinstellers (101) miteinander zu verbinden, wobei das Übertragungselement (96) konfiguriert ist, eine Verschiebung des verschiebbaren Abschnitts (91, 191, 291, 391) auf die Eingangseinheit (130, 131, 132) zu übertragen, um den Spalteinsteller (101) zu betätigen.

2. Der Bremssattel (20) nach Anspruch 1, umfassend
ein Gehäuse (34), das fest an dem Körper (30) angebracht ist und den verschiebbaren Abschnitt (91, 191, 291, 391) abdeckt,
wobei eines der Enden des Führungselements (97), das fest an dem Körper (30) angebracht ist, fest an dem Gehäuse (34) angebracht ist.

3. Der Bremssattel (20) nach Anspruch 1 oder 2, umfassend
einen Kontaktabschnitt (73B), der zusammen mit der Ausgangsstange (73) bewegbar ist, wobei der Kontaktabschnitt (73B) so konfiguriert ist, dass er den verschiebbaren Abschnitt (91) berührt, wenn sich die Ausgangsstange (73) um den vorgegebenen Abstand oder mehr bewegt und dann in eine ursprüngliche Position zurückkehrt, wodurch der verschiebbare Abschnitt (91) in eine ursprüngliche Position zurückkehrt.

4. Der Bremssattel (20) nach Anspruch 3,
wobei der verschiebbare Abschnitt (91) einen drehbaren Arm (92B) aufweist, und
wobei der Arm (92B) den Kontaktabschnitt (73B) nicht berührt, bis sich die Ausgangsstange (73) um den vorgegebenen Abstand bewegt, und auf einem Weg positioniert ist, dem der Kontaktabschnitt (73B) zu folgen hat, sobald sich die Ausgangsstange (73) um den vorgegebenen Abstand oder mehr bewegt hat.

5. Der Bremssattel (20) nach einem der Ansprüche 1 bis 4,
wobei die Eingangseinheit (130) des Spalteinstellers (101) eine bogenförmige Oberfläche aufweist,
wobei ein Ende des Übertragungselements (96) fest an der bogenförmigen Oberfläche der Eingangseinheit (130) des Spalteinstellers (101) angebracht ist, und
wobei sich das Übertragungselement (96) in einer Richtung tangential zu der bogenförmigen Oberfläche erstreckt.

6. Der Bremssattel (20) nach einem der Ansprüche 1 bis 5,
wobei der verschiebbare Abschnitt (291, 391) eine bogenförmige Oberfläche aufweist,
wobei ein Ende des Übertragungselements (96) fest an der bogenförmigen Oberfläche des verschiebbaren Abschnitts (291, 391) angebracht ist, und
wobei sich das Übertragungselement (96) in einer Richtung tangential zu der bogenförmigen Oberfläche erstreckt.

7. Der Bremssattel (20) nach einem der Ansprüche 1 bis 6, wobei der verschiebbare Abschnitt (91, 191, 291) einen Verstärkungsmechanismus (92, 192, 292) zum Verstärken der Ausgabe von der Ausgangsstange (73) und zum Verwenden der verstärkten Ausgabe zum Ziehen des Übertragungselements (96) enthält.

8. Der Bremssattel (20) nach Anspruch 7,
wobei der Verstärkungsmechanismus (92, 192, 292) einen Aufwandsarm (92A, 192A, 292A), der um einen Drehpunkt drehbar ist, wenn er von der Ausgabe von der Ausgangsstange (73) beaufschlagt wird, und einen Lastarm (92B, 192B, 292B) aufweist, der um den Drehpunkt drehbar ist, wenn er von der Ausgabe von der Ausgangsstange (73) beaufschlagt wird, um das Übertragungselement (96) zu ziehen, und
wobei der Aufwandsarm (92A, 192A, 292A) eine kürzere Länge als der Lastarm (92B, 192B, 292B) aufweist.

9. Der Bremssattel (20) nach Anspruch 8, wobei die Ausgangsstange (73) einen Kontaktabschnitt (73B) enthält, der so konfiguriert ist, dass er den Aufwandsarm (92A) berührt, wenn sich die Ausgangsstange (73) in eine Ausgaberichtung bewegt, in der die Ausgabe erfolgt, und dass er den Lastarm (92B) berührt, um den verschiebbaren Abschnitt (91) in eine ursprüngliche Position zurückzubringen, wenn sich die Ausgangsstange (73) in eine Nicht-Ausgaberichtung bewegt, in der keine Ausgabe erfolgt.

10. Der Bremssattel (20) nach einem der Ansprüche 1 bis 8, wobei der verschiebbare Abschnitt (91, 191, 291, 391) eine Umwandlungseinheit (92, 192, 292, 391) zum Umwandeln der Bewegung der Ausgangsstange (73) in eine Bewegung des Übertragungselements (96) in einer Richtung, die eine Richtung schneidet, in der die Ausgangsstange (73) beweglich ist, enthält.

11. Der Bremssattel (20) nach Anspruch 10, wobei die Umwandlungseinheit (92, 192, 292) auch als ein Verstärkungsmechanismus (92, 192, 292) zum Verstärken der Ausgabe von der Ausgangsstange (73) und zum Übertragen der verstärkten Ausgabe an das Übertragungselement (96) dient.

12. Der Bremssattel (20) nach einem der Ansprüche 1 bis 11, umfassend ein Energiezuführelement (132), das in einer Eingangseinheit des Spalteinstellers (101) vorgesehen ist, wobei das Energiezuführelement (132) so konfiguriert ist, dass es das Übertragungselement (96) zieht.

13. Der Bremssattel (20) nach Anspruch 12,
wobei die Eingangseinheit des Spalteinstellers (101) eine Einwegkupplung (131) enthält, die mit dem Übertragungselement (96) verbunden ist, und
wobei, wenn das Übertragungselement (96) durch den verschiebbaren Abschnitt (91, 191, 291, 391) gezogen wird, sich die Einwegkupplung (131) dreht, und wenn der verschiebbare Abschnitt (91, 191, 291, 391) in eine ursprüngliche Position zurückkehrt, eine Energiezuführkraft von dem Energiezuführelement (132) die Eingangseinheit in eine entgegengesetzte Richtung dreht, wodurch der Spalteinsteller (101) verlängert und die Spalte zwischen den Bremsbelägen (12) und der Scheibe (11) entsprechend reduziert werden.

14. Der Bremssattel (20) nach einem der Ansprüche 1 bis 13,
wobei das Übertragungselement (96) ein Draht ist, und
wobei das Führungselement (97) wie ein Rohr geformt ist und der Draht innerhalb des Führungselements (97) verschiebbar ist.

15. Der Bremssattel (20) nach Anspruch 1, wobei
ein Aktuator (15) die Ausgangsstange (73) zum Ausgeben einer Kraft zum Drehen der Bremssattelhebel (40, 50) enthält;
wobei der verschiebbare Abschnitt (91, 191, 291) einen Aufwandsarm (92A, 192A, 292A), der um einen Drehpunkt drehbar ist, wenn er durch die Ausgabe von der Ausgangsstange (73) beaufschlagt wird, einen Lastarm (92B, 192B, 292B), der um den Drehpunkt drehbar ist, wenn er durch die Ausgabe beaufschlagt wird, um das Übertragungselement (96) zu verschieben, und eine Umwandlungseinheit (92, 192, 292) zum Umwandeln der Bewegung der Ausgangsstange (73) in eine Bewegung des Übertragungselements (96) in einer Richtung, die eine Richtung schneidet, in der die Ausgangsstange (73) beweglich ist, enthält, und der Aufwandsarm (92A, 192A, 292A) eine kürzere Länge als der Lastarm (92B, 192B, 292B) hat, sodass der verschiebbare Abschnitt (91, 191, 291) die Ausgabe von der Ausgangsstange (73) verstärkt und die verstärkten Ausgabe verwendet, um das Übertragungselement (96) zu verschieben.

## Revendications

1. Étrier de frein (20) comprenant :
deux leviers d'étrier (40, 50) retenant chacun un patin de frein (12) ;
une tige de sortie (73) pour émettre une force de déplacement des leviers d'étrier (40, 50) de sorte qu'un disque (11) unique est pris en sandwich entre les deux patins de frein (12) ;
un ajusteur d'espace (101) attaché de manière fixe entre les deux leviers d'étrier (40, 50), l'ajusteur d'espace (101) étant conçu pour ajuster des espaces entre les patins de frein (12) et le disque (11) ;
un corps (30) retenant les deux leviers d'étrier (40, 50) d'une manière mobile et retenant la tige de sortie (73) ;
une partie déplaçable (91, 191, 291, 391) attachée de manière fixe au corps (30), la partie déplaçable (91, 191, 291, 391) étant déplaçable lorsqu'elle est actionnée par la tige de sortie (73) si la tige de sortie (73) se déplace d'une distance prédéterminée ou plus ; **caractérisé en ce que** l'étrier de frein comprend en outre :
un élément de guidage (97) ayant des extrémités attachées de manière fixe au corps (30) et à l'ajusteur d'espace (101), l'élément de guidage (97) étant formé d'un élément souple tubulaire plus long d'une distance entre le corps (30) et l'ajusteur d'espace (101) observé lorsqu'un déplacement relatif entre le corps (30) et l'ajusteur d'espace (101) fait preuve d'une valeur plus grande ; et
un élément de transmission (96) s'étendant à travers l'élément de guidage (97) pour raccorder ensemble la partie déplaçable (91, 191, 291, 391) et une unité d'entrée (130, 131, 132) de l'ajusteur d'espace (101), l'élément de transmission (96) étant conçu pour transmettre un déplacement de la partie déplaçable (91, 191, 291, 391) à l'unité d'entrée (130, 131, 132) afin d'actionner l'ajusteur d'espace (101).

2. Étrier de frein (20) selon la revendication 1, comprenant
un boîtier (34) attaché de manière fixe au corps (30) et recouvrant la partie déplaçable (91, 191, 291, 391),
l'une des extrémités de l'élément de guidage (97) qui est attachée de manière fixe au corps (30) étant attachée de manière fixe au boîtier (34).

3. Étrier de frein (20) selon la revendication 1 ou 2, comprenant
une partie de contact (73B) mobile conjointement à la tige de sortie (73), la partie de contact (73B) étant conçue pour toucher la partie déplaçable (91) lorsque la tige de sortie (73) se déplace de la distance prédéterminée ou plus et ensuite revient à une position d'origine, ramenant ainsi la partie déplaçable (91) à une position d'origine.

4. Étrier de frein (20) selon la revendication 3,
la partie déplaçable (91) incluant un bras (92B) rotatif, et
le bras (92B) ne touchant pas la partie de contact (73B) jusqu'à ce que la tige de sortie (73) se déplace de la distance prédéterminée et est positionnée sur un trajet à suivre par la partie de contact (73B) une fois que la tige de sortie (73) s'est déplacée de la distance prédéterminée ou plus.

5. Étrier de frein (20) selon l'une quelconque des revendications 1 à 4,
l'unité d'entrée (130) de l'ajusteur d'espace (101) ayant une surface en forme d'arc,
une extrémité de l'élément de transmission (96) étant attachée de manière fixe à la surface en forme d'arc de l'unité d'entrée (130) de l'ajusteur d'espace (101), et
l'élément de transmission (96) s'étendant dans un sens tangent à la surface en forme d'arc.

6. Étrier de frein (20) selon l'une quelconque des revendications 1 à 5,
la partie déplaçable (291, 391) ayant une surface en forme d'arc,
une extrémité de l'élément de transmission (96) étant attachée de manière fixe à la surface en forme d'arc de la partie déplaçable (291, 391), et
l'élément de transmission (96) s'étendant dans un sens tangent à la surface en forme d'arc.

7. Étrier de frein (20) selon l'une quelconque des revendications 1 à 6, la partie déplaçable (91, 191, 291) incluant un mécanisme d'amplification (92, 192, 292) pour amplifier la sortie de la tige de sortie (73) et utilisant la sortie amplifiée pour tirer l'élément de transmission (96).

8. Étrier de frein (20) selon la revendication 7,
le mécanisme d'amplification (92, 192, 292) incluant un bras d'effort (92A, 192A, 292A) pouvant tourner autour d'un pivot lorsqu'actionné par la sortie de la tige de sortie (73) et un bras de charge (92B, 192B, 292B) pouvant tourner autour du pivot lorsqu'actionné par la sortie de la tige de sortie (73) pour tirer l'élément de transmission (96), et
le bras d'effort (92A, 192A, 292A) ayant une longueur plus courte que le bras de charge (92B, 192B, 292B).

9. Étrier de frein (20) selon la revendication 8, la tige de sortie (73) incluant une partie de contact (73B) conçue pour toucher le bras d'effort (92A) lorsque la tige de sortie (73) se déplace dans un sens de sortie dans lequel la sortie est effectuée et pour toucher le bras de charge (92B) pour ramener la partie déplaçable (91) vers une position d'origine lorsque la tige de sortie (73) se déplace dans un sens non de sortie dans lequel aucune sortie n'est effectuée.

10. Étrier de frein (20) selon l'une quelconque des revendications 1 à 8, la partie déplaçable (91, 191, 291, 391) incluant une unité de conversion (92, 192, 292, 391) pour convertir un mouvement de la tige de sortie (73) en mouvement de l'élément de transmission (96) dans un sens en intersection avec un sens dans lequel la tige de sortie (73) est mobile.

11. Étrier de frein (20) selon la revendication 10, l'unité de conversion (92, 192, 292) servant également de mécanisme d'amplification (92, 192, 292) pour amplifier la sortie de la tige de sortie (73) et transmettre la sortie amplifiée à l'élément de transmission (96).

12. Étrier de frein (20) selon l'une quelconque des revendications 1 à 11, comprenant
un élément d'activation (132) disposé dans une unité d'entrée de l'ajusteur d'espace (101), l'élément d'activation (132) étant conçu pour tirer l'élément de transmission (96).

13. Étrier de frein (20) selon la revendication 12,
l'unité d'entrée de l'ajusteur d'espace (101) incluant un embrayage à une voie (131) raccordé à l'élément de transmission (96), et
lorsque l'élément de transmission (96) est tiré par la partie déplaçable (91, 191, 291, 391), l'embrayage à une voie (131) tourne, et lorsque la partie déplaçable (91, 191, 291, 391) revient à une position d'origine, une force d'activation de l'élément d'activation (132) fait tourner l'unité d'entrée dans un sens opposé, allongeant ainsi l'ajusteur d'espace (101) et réduisant en conséquence les espaces entre les patins de frein (12) et le disque (11).

14. Étrier de frein (20) selon l'une quelconque des revendications 1 à 13,
l'élément de transmission (96) étant un câble, et
l'élément de guidage (97) étant mis en forme de tube et le câble pouvant être déplacé à l'intérieur de l'élément de guidage (97).

15. Étrier de frein (20) selon la revendication 1,
un actionneur (15) incluant la tige de sortie (73) pour émettre une force afin de faire tourner les leviers d'étrier (40, 50) ;
la partie déplaçable (91, 191, 291) incluant un bras d'effort (92A, 192A, 292A) pouvant tourner autour d'un pivot lorsqu'actionné par la sortie de la tige de sortie (73), un bras de charge (92B, 192B, 292B) pouvant tourner autour du pivot lorsqu'actionné par la sortie afin de déplacer l'élément de transmission (96), et une unité de conversion (92, 192, 292) pour convertir un mouvement de la tige de sortie (73) en mouvement de l'élément de transmission (96) dans un sens en intersection avec un sens dans lequel la tige de sortie (73) est mobile, et le bras d'effort (92A, 192A, 292A) présentant une longueur plus courte que le bras de charge (92B, 192B, 292B), de sorte que la partie déplaçable (91, 191, 291) amplifie la sortie de la tige de sortie (73) et utilise la sortie amplifiée pour déplacer l'élément de transmission (96).
